# EUROPEAN PATENT APPLICATION

(11) **EP 4 832 571 A1**
(43) Date of publication of application: **28.10.2026**
(21) Application number: 23961853.1
(22) Date of filing: 20.12.2023
(51) Int. Cl.: H04W 36/00

(54) **COMMUNICATION METHOD, APPARATUS AND DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN); FU, Zhe, Dongguan, Guangdong 523860 (CN); YU, Xinlei, Dongguan, Guangdong 523860 (CN)
(74) Representative: Grassi, Stefano
(86) International application number: PCT/CN2023/140410
(87) International publication number: WO 2025/129514

(57) **Abstract**

Embodiments of the present application provide a communication method, applied to a first device. One or more relay terminal devices are present on a first link between the first device and a second device. The method comprises: when a timer expires, disconnecting a first link, wherein a start condition of the timer is related to the state of the first link changing or being about to change. That is, the first device can trigger the start of the timer on the basis of the state of the first link changing or being about to change, if the timer does not expire, the first device does not perform the operation of disconnecting the first link, and if the timer expires, the first device disconnects the first link. In this way, when the state of the first link changes or is about to change, the data cached on the first link can be transmitted as completely as possible before the first device disconnects the first link, thereby avoiding data loss of the data that has not been transmitted completely.

## Description

### TECHNICAL FIELD

The embodiments of the present disclosure relate to the technical field of communications, and more particularly to, a communication method, an apparatus, a device, a chip, and a storage medium.

### BACKGROUND

In a User Equipment (UE) to Network (U2N) relay service scenario, a remote terminal may be connected to a network through one or more relays. When a handover occurs for the remote terminal, some data may be buffered on the relay terminal between the remote terminal and the network and not transmitted to the target entity (for example, uplink data sent by the remote terminal is not transmitted to the network; for another example, downlink data sent by the network is not transmitted to the remote terminal), thereby resulting in data loss when the remote terminal switches to a new cell or new base station.

### SUMMARY

The embodiments of present disclosure provide a communication method, an apparatus, a device, a chip, and a storage medium.

In a first aspect, an embodiment of the present disclosure provides a communication method applied to a first device. One or more relay terminal devices are present on a first link between the first device and a second device. The method includes a following operation. The first link is disconnected in a case where a timer expires. A start condition of the timer is associated with occurrence or imminent occurrence of a state change of the first link.

In a second aspect, an embodiment of the present disclosure provides a communication method applied to a third device. A first link on which the third device is located includes a remote terminal device, a target device and one or more relay terminal devices between the remote terminal device and the target device. The method includes a following operation. First information is sent to a fourth device on the first link. The first information is used for determining whether data for which transmission has not been completed exists on the first link.

In a third aspect, an embodiment of the present disclosure provides a communication method applied to a fourth device. A first link on which the fourth device is located includes a remote terminal device, a target device and one or more relay terminal devices between the remote terminal device and the target device. The method includes a following operation. First information is received from a third device on the first link. The first information is used for determining whether data for which transmission has not been completed exists on the first link.

In a fourth aspect, an embodiment of the present disclosure provides a communication method applied to a fourth relay terminal device. The fourth relay terminal device is located on a first link between a first remote terminal device and a target device, and one or more relay terminal devices are present on the first link. The method includes a following operation. In a case where a first Acknowledgement (ACK) is received from a fifth device on the first link, a second ACK is sent to a sixth device on the first link. The fifth device is a next hop device of the fourth relay terminal device in a data transmission direction, and the sixth device is a previous hop device of the fourth relay terminal device in the data transmission direction. The first ACK is used for indicating that the fifth device has successfully received first data from the fourth relay terminal device; and the second ACK is used for indicating that the fourth relay terminal device has successfully received the first data from the sixth device.

In a fifth aspect, an embodiment of the present disclosure provides a communication device. One or more relay terminal devices are present on a first link between the device and a second device. The device includes a processing unit. The processing unit is configured to disconnect the first link in a case where a timer expires. A start condition of the timer is associated with occurrence or imminent occurrence of a state change of the first link.

In a sixth aspect, an embodiment of the present disclosure provides a communication device. A first link on which the device is located includes a remote terminal device, a target device and one or more relay terminal devices between the remote terminal device and the target device. The device includes a first communication unit. The first communication unit is configured to send first information to a fourth device on the first link. The first information is used for determining whether data for which transmission has not been completed exists on the first link.

In a seventh aspect, an embodiment of the present disclosure provides a communication device. A first link on which the device is located includes a remote terminal device, a target device and one or more relay terminal devices between the remote terminal device and the target device. The device includes a second communication unit. The second communication unit is configured to receive first information from a third device on the first link. The first information is used for determining whether data for which transmission has not been completed exists on the first link.

In an eighth aspect, an embodiment of the present disclosure provides a communication device. The device is located on a first link between a first remote terminal device and a target device. One or more relay terminal devices are present on the first link. The device includes a third communication unit. The third communication unit is configured to: in a case where a first ACK is received from a fifth device on the first link, send a second ACK to a sixth device on the first link. The fifth device is a next hop device of the device in a data transmission direction, and the sixth device is a previous hop device of the device in the data transmission direction. The first ACK is used for indicating that the fifth device has successfully received first data from the device; and the second ACK is used for indicating that the device has successfully received the first data from the sixth device.

In a ninth aspect, an embodiment of the present disclosure provides a communication device including a processor and a memory. The memory is configured to store a computer program. The processor is configured to invoke and execute the computer program stored in the memory, to perform the method of any one of the first aspect to the fourth aspect.

In a tenth aspect, an embodiment of the present disclosure provides a chip. The chip includes a processor configured to invoke and execute a computer program from a memory, to enable a device on which the chip is mounted to perform the method of any one of the first aspect to the fourth aspect.

In an eleventh aspect, an embodiment of the present disclosure provides a computer-readable storage medium configured to store a computer program. The computer program causes a computer to perform the method of any one of the first aspect to the fourth aspect.

In a twelfth aspect, an embodiment of the present disclosure provides a computer program product including computer program instructions. The computer program instructions cause a computer to perform the method of any one of the first aspect to the fourth aspect.

In a thirteenth aspect, an embodiment of the present disclosure provides a computer program that, when executed on a computer, causes the computer to perform the method of any one of the first aspect to the fourth aspect.

According to the aforementioned technical solutions, the first device may disconnect the first link in the case where the timer expires. The start condition of the timer is associated with the occurrence or imminent occurrence of the state change of the first link. That is to say, the first device may trigger the start of the timer based on the occurrence or imminent occurrence of the state change of the first link. If the timer does not expire, the first device does not perform the operation of disconnecting the first link; and if the timer expires, the first device disconnects the first link. In this way, in the case of the occurrence or imminent occurrence of the state change of the first link, before the first device disconnects the first link, it is possible to complete the transmission of the data buffered on the first link as much as possible, thereby avoiding loss of the data for which the transmission has not been completed.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:

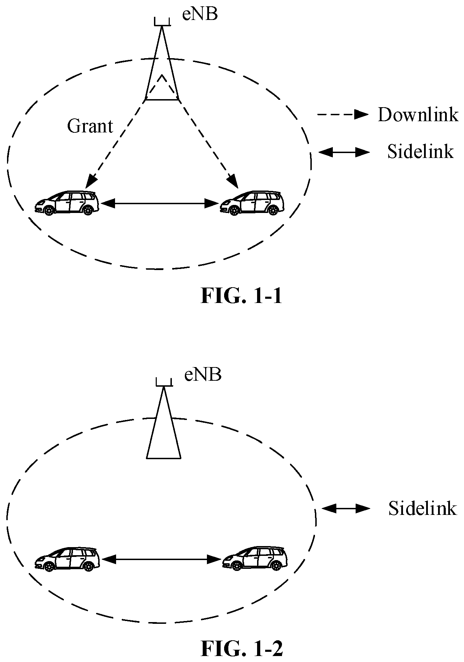

FIG. 1-1 is a schematic diagram of a resource selection corresponding to a first mode according to an embodiment of the present disclosure;
FIG. 1-2 is a schematic diagram of a resource selection corresponding to a second mode according to an embodiment of the present disclosure;
FIG. 2 is a schematic diagram of a user plane protocol stack of a sidelink Layer 2 (L2) U2N relay architecture according to an embodiment of the present disclosure;
FIG. 3 is an exemplary schematic diagram of a communication scenario applicable to embodiments of the present disclosure according to an embodiment of the present disclosure;
FIG. 4 is a first schematic flowchart of a communication method according to an embodiment of the present disclosure;
FIG. 5 is a second schematic flowchart of a communication method according to an embodiment of the present disclosure;
FIG. 6 is a third schematic flowchart of a communication method according to an embodiment of the present disclosure;
FIG. 7 is an exemplary schematic flowchart of a feedback manner according to an embodiment of the present disclosure;
FIG. 8 is a first schematic diagram of a structural composition of a communication device according to an embodiment of the present disclosure;
FIG. 9 is a second schematic diagram of a structural composition of a communication device according to an embodiment of the present disclosure;
FIG. 10 is a third schematic diagram of a structural composition of a communication device according to an embodiment of the present disclosure;
FIG. 11 is a fourth schematic diagram of a structural composition of a communication device according to an embodiment of the present disclosure;
FIG. 12 is a schematic structural diagram of a communication device according to an embodiment of the present disclosure; and
FIG. 13 is a schematic structural diagram of a chip in an embodiment of the present disclosure.

### DETAILED DESCRIPTION

The technical solutions of the embodiments of the present disclosure would be described in conjunction with the accompanying drawings in the embodiments of the present disclosure. It is apparent that the described embodiments are only part of the embodiments of the present disclosure, not all the embodiments. Based on the embodiments in the present disclosure, all other embodiments obtained by those of ordinary skill in the art without creative work shall fall within the scope of protection of the present disclosure.

The technical solutions of the embodiments of the present disclosure may be applied to various sidelink communication systems. In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

### 1. Device to Device (D2D)/Vehicle to Everything (V2X) in Long Term Evolution (LTE)

The D2D communication is a Sidelink (SL) transmission technology based on the D2D. Different from the traditional cellular system where the communication data is received or sent through the base station, the V2X system adopts the manner of terminal-to-terminal direct communication. Therefore, the D2D communication has higher spectrum efficiency and a lower transmission delay. The 3rd Generation Partnership Project (3GPP) defines two transmission modes: a first mode (Mode 3) and a second mode (Mode 4).

For the first mode, the transmission resources for the terminal are allocated by the base station (eNB), and the terminal sends data on the sidelink according to the resources allocated by the base station. The base station may allocate resources for single transmission or semi-static transmission to the terminal. As shown in FIG. 1-1, the transmission resources for the terminal are allocated by the base station. The base station allocates the resources to the terminal based on grant signaling through the downlink. The terminal sends the data on the sidelink according to the resources allocated by the base station.

For the second mode, the terminal selects a resource from a resource pool to perform transmission of the data. As shown in FIG. 1-2, the terminal selects a resource from a resource pool to perform the transmission of the data.

In the 3GPP, the D2D is divided into different stages for study.
1) Proximity based Service (ProSe): the D2D communication in Rel-12/13 studies the scenario of the ProSe, which mainly aims at public safety services.

In the ProSe, by configuring a position of a resource pool in time domain, e.g., the resource pool is non-consecutive in the time domain, a UE may discontinuously send or receive data on the sidelink, thereby achieving the effect of power saving.

2) V2X: a scenario of the vehicle-to-vehicle communication in the V2X system is studied in Rel-14/15, which mainly focuses on services of communication between vehicles or between the vehicle and the person with a high relative speed.

In the V2X, due to the continuous power supply for the vehicle-mounted system, the data transmission delay, rather than the power efficiency, is the main problem. Therefore, it is required in the system design that the terminal may perform continuous transmission and reception.

3) Wearable device: a scenario where the wearable device accesses the network through a mobile phone is studied in Rel-14 Further enhancements Device to Device (FeD2D), which mainly focuses on the scenarios of accessing with a low moving speed and a low power access.

In the FeD2D, in the pre-study stage, the 3GPP concluded that the base station may configure Discontinuous Reception (DRX) parameters of a remote terminal through a relay terminal. However, there is no conclusion on the specific details of how to configure the DRX.

### 2. New Radio (NR) V2X

On the basis of LTE V2X, the NR V2X is not limited to the broadcast scenario, but further expanded to unicast and multicast scenarios. The application of the V2X is studied in these scenarios.

Similar to the LTE V2X, the NR V2X also defines two resource grant modes, mode-1/2 (i.e., the aforementioned first mode and the second mode). Furthermore, a user may be in a mixed mode where both the mode-1 and the mode-2 may be used for the acquisition of the resources. Different from the LTE V2X, in addition to the feedback-free and UE-autonomously initiated Hybrid Automatic Repeat reQuest (HARQ) repetition, the NR V2X introduces feedback-based HARQ repetition, which is not limited to the unicast communication but also includes the multicast communication.

### 3. Sidelink L2 U2N relay technology

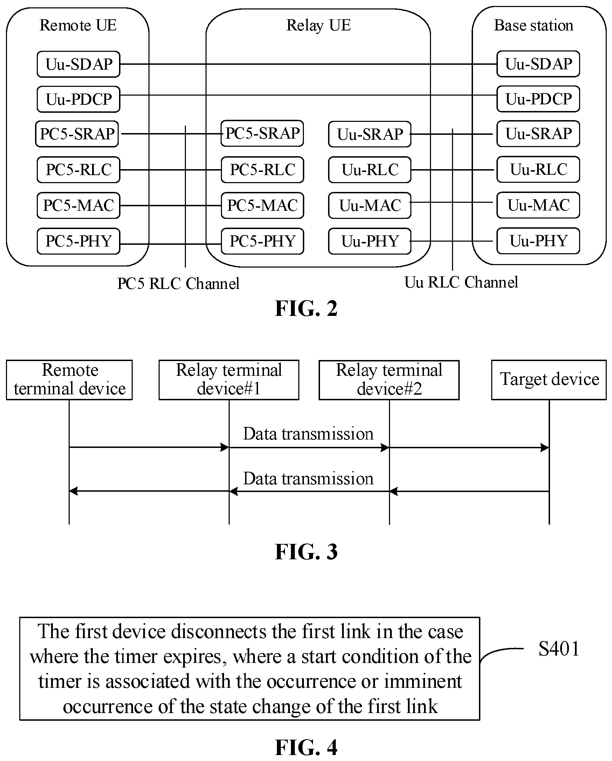

A user plane protocol stack of the sidelink L2 U2N relay architecture is shown as FIG. 2. For the L2 U2N relay, a Sidelink Relay Adaptation Protocol (SRAP) sublayer is located above a Radio Link Control (RLC) sublayer of the control plane and user plane at the PC5 interface and the Uu interface. A Service Data Adaptation Protocol (SDAP) sublayer, a Packet Data Convergence Protocol (PDCP) sublayer, and a Radio Resource Control (RRC) sublayer of the Uu interface terminate between the remote UE of the U2N relay and the base station (gNB). The SRAP sublayer, the RLC sublayer, an MAC sublayer and a Physical Layer (PHY) sublayer terminate at each link (i.e., a link between the remote UE of the U2N relay and the U2N relay UE, and a link between the U2N relay UE and the gNB).

### 4. Data plane operation in a Handover (HO) procedure

For the UE in the RRC connected state (RRC_CONNECTED), in an Intra-NR-Access scenario, the following three principles are considered for the processing on the data plane during the mobility activity, to avoid the data loss during the HO.
1) During the preparation of the HO, a data plane tunnel may be set up between a source gNB and a target gNB.
2) During the execution of the HO, user data may be forwarded from the source gNB to the target gNB. Moreover, the forwarding may be performed sequentially in the case where the source gNB receives a packet from the User Plane Function (UPF) or the buffer of the source gNB has not been cleared.
3) During the completion of the HO, the target gNB sends a path handover request message to an Access and Mobility Management Function (AMF) to inform that the UE has accessed; and then the AMF triggers the 5G Core (5GC) internal signaling related to the path handover and the actual path handover from the source gNB to the target gNB in the UPF. In the case where the source gNB receives the packet from the UPF or the buffer of the source gNB has not been cleared, the source gNB may continue to forward the data.

The related technologies/terms involved in the embodiments of the present disclosure are briefly in the foregoing, which will not be repeated in the following.

It is to be understood that the terms "system" and "network" are often used interchangeably herein. Herein, the term "and/or" in the present disclosure is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or". It is further to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It is further to be understood that the term "correspond" mentioned in the description of the embodiments of the present disclosure may mean that there is a direct correspondence or an indirect correspondence between the two, may also mean that there is an association relationship between the two, and may also be a relationship between indication and being indicated, configuration and being configured, etc. It is further to be understood that the term "predefined" or "predefined rule" mentioned in the embodiments of the present disclosure may be achieved by pre-storing corresponding codes, tables or other means used for indicating relevant information in devices (e.g., including the terminal devices and the network devices), and the specific implementation thereof is not limited in the present disclosure.

It is further to be understood that the specific forms of the terminal device and the network device are not limited in the embodiments of the present disclosure.

The terminal device (or referred to as terminal) in the embodiments of the present disclosure may be an access terminal, a UE, a user unit, a user station, a mobile station, a mobile platform, a remote station, a remote terminal, a mobile device, a user terminal, a terminal, a wireless communication device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a future evolved network or the like.

The network device (or referred to as network) in the embodiments of the present disclosure may be an Evolutional Node B (eNB or eNodeB) in an LTE system, a Next Generation Radio Access Network (NG RAN) device, a base station (gNB) in an NR system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

At present, in the scenario where the terminal is directly connected to the network, when the PDCP layer of the terminal and the PDCP layer of the network send the data, the PDCP layer of the terminal and the PDCP layer of the network may determine, according to a result of the RLC feedback, whether to perform the repetition of the data in the buffer. For example, if no ACK is received for certain data, the repetition of the data is required; otherwise, the PDCP entity may consider that the data with the ACK is the data for which the repetition is not required.

In the L2 U2N relay scenario, since the PDCP entity is an end-to-end entity (from the remote UE to the gNB), and the RLC entity is an entity that exists on each hop (from the remote UE to the relay UE/from one relay to another relay/from relay to the Network (NW)), the RLC feedback result being the ACK does not mean that the transmission of the data has been correctly performed to the corresponding PDCP counterpart, and the data may still be located at a certain hop relay in the middle.

That is to say, in the U2N relay scenario, based on the current PDCP/RLC mechanism, in the data transmission/data processing in the RLC Acknowledgement Mode (AM), the case of the data loss in the HO procedure may occur. For example, when the HO occurs for the remote terminal, some data may be buffered on the relay terminal between the remote terminal and the network and not transmitted to the target entity (for example, the uplink data sent by the remote terminal is not transmitted to the network; for another example, the downlink data sent by the network is not transmitted to the remote terminal), thereby resulting in the data loss when the remote terminal switches to a new cell or new base station.

In view of this, the present disclosure provides a communication method, an apparatus, a device, a chip, and a storage medium. For example, the method may be applied to the U2N relay scenario or a UE to UE (U2U) relay scenario. In the method, one or more relay terminal devices may be present on a first link between the first device and a second device. The first device may disconnect the first link in the case where the timer expires. The start condition of the timer is associated with the occurrence or imminent occurrence of the state change of the first link. That is to say, the first device may trigger the start of the timer based on the occurrence or imminent occurrence of the state change of the first link. If the timer does not expire, the first device does not perform the operation of disconnecting the first link; and if the timer expires, the first device disconnects the first link. In this way, in the case of the occurrence or imminent occurrence of the state change of the first link, before the first device disconnects the first link, it is possible to complete the transmission of the data buffered on the first link as much as possible, thereby avoiding the loss of the data for which the transmission has not been completed.

Exemplarily, FIG. 3 illustrates an exemplary schematic diagram of a communication scenario applicable to embodiments of the present disclosure. In the communication scenario shown in FIG. 3, a remote terminal device, a target device, and relay terminal devices (for example, a relay terminal device#1 and a relay terminal device#2 in FIG. 3) located on a link (for example, denoted as a first link) between the remote terminal device and the target device may be included. Data transmission between the remote terminal device and the target device may be implemented through the relay terminal devices. For example, the remote terminal device may perform the transmission of the data to the target device through the relay terminal device#1 and the relay terminal device#2. For another example, the target device may perform the transmission of the data to the remote terminal device through the relay terminal device#2 and the relay terminal device#1.

It is to be noted that the presence of two relay terminal devices (the relay terminal device#1 and the relay terminal device#2) between the remote terminal device and the target device in FIG. 3 is merely an example. In some other scenarios, there may be other numbers of relay terminal devices between the remote terminal device and the target device. For example, the number of relay terminal devices between the remote terminal device and the target device may be 1, or 3 or may be more, which is not limited in the embodiments of the present disclosure.

It is to be noted that the "link" in the embodiments of the present disclosure may be replaced with "path".

In some embodiments, the target device may be a network device or another remote terminal device. In the case where the target device is the network device, the method in the embodiments of the present disclosure may be applied to the U2N relay scenario. In the case where the target device is another remote terminal device, the method in the embodiments of the present disclosure may be applied to the U2U relay scenario.

In order to facilitate understanding of the technical solutions of the embodiments of the present disclosure, the technical solutions of the present disclosure will be described in detail below through specific embodiments. The above related technologies used as optional solutions may be combined with technical solution of the embodiments of the present disclosure in various ways, and the combinations belong to the scope of protection of the embodiments of the present disclosure. Embodiments of the present disclosure include at least some of the following content.

FIG. 4 is a first schematic flowchart of a communication method according to an embodiment of the present disclosure. In the method, one or more relay terminal devices are present on a first link between the first device and a second device. As shown in FIG. 4, the method may include a following operation S401.

In operation S401, the first device disconnects the first link in the case where the timer expires. The start condition of the timer is associated with the occurrence or imminent occurrence of the state change of the first link.

Herein, disconnecting the first link may also be understood as disconnecting the connection between the first device and the second device. The start condition of the timer being associated with the occurrence or imminent occurrence of the state change of the first link may be further understood as: the first device may trigger the start of the timer based on the occurrence or imminent occurrence of the state change of the first link.

Exemplarily, the occurrence of the state change of the first link may mean that the state change of the first link has occurred. For example, the state changes of one or more sublinks of the first link have occurred (for example, the RLF occurs for a link between a certain relay terminal device and an adjacent device that are on the first link, a link handover or a cell handover occurs for the certain relay terminal device, etc.).

Exemplarily, the imminent occurrence of the state change of the first link may mean that it has been determined/decided that the state change of the first link is about to occur, but the state change of the first link has not yet occurred currently. For example, the first device (it is assumed that the first device is the remote terminal device) has received a handover command, but the source path (first link) has not been disconnected. For another example, the first device (it is assumed that the first device is the remote terminal device) has accessed another link during the first device performs the handover procedure, but the source path (first link) has not been disconnected.

In some embodiments, the first device may be the remote terminal device, and the second device may be the network device.

For example, in the communication scenario shown in FIG. 3, the first device may be the remote terminal device in FIG. 3; and the second device may be, for example, the target device in FIG. 3 and the target device is the network device.

In this case, the start condition of the timer may include one or more of the following 11) to 13).

11) The remote terminal device (first device) receives first indication information from the network device. The first indication information is used for instructing the remote terminal device to switch to another link from the first link.

That is to say, if the remote terminal device receives the first indication information from the network device, the timer may be started; and if the timer expires, the remote terminal device may disconnect the first link. The remote terminal device receives the first indication information from the network device, which may be considered as the imminent occurrence of the state change of the first link.

In some embodiments, the first indication information may be, for example, an HO command (for example, an RRCReconfiguration message). The HO command may carry handover-related information. For example, the HO command may include following indication: in the intra-gNB handover scenario, switching from an indirect path (first link) to a direct path/indirect path (another link). For another example, the HO command may include following indication: in the inter-gNB handover scenario, switching from the indirect path (first link) to the direct path/indirect path (another link).

12) The remote terminal device successfully accesses another link.

That is to say, if the remote terminal device successfully accesses another link (for example, the remote terminal device successfully sends the RRCReconfigurationComplete message to the network device on another link), the timer may be started; and if the timer expires, the remote terminal device may disconnect the first link. The remote terminal device successfully accesses another link, which may be considered as the imminent occurrence of the state change of the first link.

13) The remote terminal device receives second indication information from a first relay terminal device on the first link, and the second indication information is used for indicating occurrence of the state change of the link between the first relay terminal device and an adjacent device on the first link.

The first relay terminal device may be, for example, any one of relay terminal devices on the first link.

That is to say, if the remote terminal device receives the second indication information from any one of the first relay terminal devices on the first link, the timer may be started; and if the timer expires, the remote terminal device may disconnect the first link (for example, the remote terminal device disconnects the link between the remote terminal device and the first relay terminal device). The remote terminal device receives the second indication information from the first relay terminal device on the first link, which may be considered that the state change of the first link has occurred.

In some embodiments, the second indication information may be, for example, a notification message from the first relay terminal device.

In some embodiments, the occurrence of the state change of the link between the first relay terminal device and the adjacent device on the first link includes any one of:
a Radio Link Failure (RLF) occurs on the link between the first relay terminal device and the adjacent device;
quality of the link between the first relay terminal device and the adjacent device is lower than a first threshold;
a link handover occurs for the first relay terminal device; or
a cell handover occurs for the first relay terminal device.

Herein, the link between the first relay terminal device and the adjacent device may be, for example, the Uu link or the PC5 link. Taking the communication scenario shown in FIG. 3 as an example, if the first relay terminal device is the relay terminal device#1, the link between the relay terminal device#1 and the adjacent device may be, for example, the PC5 link between the relay terminal device#1 and the remote terminal device; or may be the PC5 link between the relay terminal device#1 and the relay terminal device#2. If the first relay terminal device is the relay terminal device#2, the link between the relay terminal device#2 and the adjacent device may be, for example, the PC5 link between the relay terminal device#2 and the relay terminal device#1; or may be the Uu link between the relay terminal device#2 and the target device (it is assumed that the target device is the network device).

In some embodiments, both the first device and the second device may be the remote terminal device.

For example, in the communication scenario shown in FIG. 3, the first device may be the remote terminal device in FIG. 3; and the second device may be, for example, the target device in FIG. 3, and the target device is another remote terminal device. Alternatively, the second device may be the remote terminal device in FIG. 3; and the first device may be, for example, the target device in FIG. 3, and the target device may be another remote terminal device.

In this case, the start condition of the timer may include: the first device determines to perform the reselection of the relay terminal device between the first device and the second device.

That is to say, in a case where the first device determines to perform the reselection of the relay terminal device between the first device and the second device, i.e., in a case where the first device determines to perform the relay reselection, the first device may start the timer. If the timer expires, the first device may disconnect the first link. In some embodiments, after the first device disconnects the first link, the first device may re-set up a connection with the second device through the reselected relay terminal device.

In some embodiments, the first device may be the first network device, and the second device may be the remote terminal device.

For example, in the communication scenario shown in FIG. 3, the first device (first network device) may be the target device in FIG. 3, and the target device may be the network device; and the second device may be, for example, the remote terminal device in FIG. 3.

In this case, the start condition of the timer may include one or more of the following 21) to 24).

21) The first network device sends third indication information to the remote terminal device, and the third indication information is used for instructing the remote terminal device to switch to another link from the first link.

That is to say, if the first network device sends the third indication information to the remote terminal device, the timer may be started; and if the timer expires, the first network device may disconnect the first link. Herein, the first network device sends the third indication information to the remote terminal device, which may be considered as the imminent occurrence of the state change of the first link.

In some scenarios, the first network device sends the third indication information to the remote terminal device, which may include a situation before the first network device sends the third indication information to the remote terminal device, for example, the first network device has determined/decided to send the third indication information to the remote terminal device but has not sent the third indication information. That is to say, in the case where the first network device has determined/decided to send the third instruction information to the remote terminal device but has not sent the third instruction information, it may be considered that the condition in 21) is met. In some scenarios, the first network device sends the third indication information to the remote terminal device, which may further include a situation when the first network device sends the third indication information to the remote terminal device or a situation where the first network device has sent the third indication information to the remote terminal device. That is to say, when the first network device sends the third indication information to the remote terminal device, or in the case where the first network device has sent the third indication information to the remote terminal device, it may be considered that the condition in 21) is met.

In some embodiments, the third indication information may be, for example, an HO command (for example, an RRCReconfiguration message). The HO command may carry handover-related information. For example, the HO command may include following indication: in the intra-gNB handover scenario, switching from the indirect path (first link) to the direct path/indirect path (another link). For another example, the HO command may include following indication: in the inter-gNB handover scenario, switching from the indirect path (first link) to the direct path/indirect path (other link).

22) The first network device receives fourth indication information from the remote terminal device, and the fourth indication information is used for indicating that the remote terminal device has successfully accessed another link.

That is to say, if the first network device receives the fourth indication information from the remote terminal device, the timer may be started; and if the timer expires, the first network device may disconnect the first link. Herein, the first network device receives the fourth indication information from the remote terminal device, which may be considered as the imminent occurrence of the state change of the first link.

Exemplarily, the start condition 22) may be applicable to the scenario where the remote terminal device performs the intra-gNB handover.

In the scenario where the remote terminal device performs the intra-gNB handover, the fourth indication information may be, for example, an RRCReconfigurationComplete message from the remote terminal device. The RRCReconfigurationComplete message may be used for indicating that the remote terminal device has successfully accessed the first network device from a new path (another link).

23) The first network device receives fifth indication information from a second network device, and the fifth indication information is used for indicating that the remote terminal device has successfully accessed the second network device.

That is to say, if the first network device receives the fifth indication information from the second network device, the timer may be started; and if the timer expires, the first network device may disconnect the first link. Herein, the first network device receives the fifth indication information from the second network device, which may be considered as the imminent occurrence of the state change of the first link.

Exemplarily, the start condition 23) may be applicable to the scenario where the remote terminal device performs the inter-gNB handover.

In the scenario where the remote terminal device performs the inter-gNB handover, the fifth indication information may be, for example, a handover request accept message from the second network device (target gNB). The handover request accept message may be used for indicating that the remote terminal device has successfully accessed the second network device.

24) The first network device sends sixth indication information to at least one relay terminal device on the first link, and the sixth indication information sent to the relay terminal device is used for instructing the relay terminal device to perform a link handover.

That is to say, if the first network device sends the sixth indication information to at least one (one or more) relay terminal device on the first link, the timer may be started; and if the timer expires, the first network device may disconnect the first link (for example, the first network device disconnects the link between the first network device and the at least one relay terminal device). Herein, the first network device sends the sixth indication information to at least one relay terminal device on the first link, which may be considered as the imminent occurrence of the state change of the first link.

In some scenarios, the first network device sends the sixth indication information to at least one relay terminal device on the first link, which may include a situation before the first network device sends the sixth indication information to the at least one relay terminal device. For example, the first network device has determined/decided to send the sixth indication information to the at least one relay terminal device but has not sent the sixth indication information. That is to say, in the case where the first network device has determined/decided to send the sixth indication information to the at least one relay terminal device but has not sent the sixth indication information, it may be considered that the condition in 24) is met. In some scenarios, the first network device sends the sixth indication information to the at least one relay terminal device on the first link, which may further include a situation when first network device sends the sixth indication information to at least one relay terminal device, or a situation where the first network device has sent the sixth indication information to the at least one relay terminal device. That is to say, when the first network device sends the sixth indication information to the at least one relay terminal device, or in the case where the first network device has sent the sixth indication information to the at least one relay terminal device, it may be considered that the condition in 24) is met.

In some embodiments, the sixth indication information may be, for example, the RRCReconfiguration message. The RRCReconfiguration message may carry handover-related information.

In some embodiments, the method may further include: the first device restarts the timer in a case where the first device receives data from the first link. After the first device restarts the timer, the timer may restart timing.

It is to be understood that if the first device receives the data from the first link, it means that the data for which the transmission has not been completed is still buffered on the first link. Thus, the first device may restart the timer, so that there is more transmission time for the data for which the transmission has not been completed, thereby completing the transmission as much as possible.

In some embodiments, the method may further include: the first device stops sending data to the second device during operation of the timer. Since the state change of the first link is currently about to occur or has occurred, in this case, it is necessary to complete the transmission of the data for which the transmission has not been completed on the first link as much as possible. Therefore, the first device should no longer send the data to the second device.

In some embodiments, the timing duration (a value of the timer) of the timer may be associated with one or more of the following 31) to 36).

31) A Packet Delay Budget (PDB) of the data transmitted on the first link.

In some embodiments, the data transmitted on the first link includes multiple Quality of Service (QoS) flows. The PDB of the data transmitted on the first link may be, for example, a maximum value among PDBs of the multiple QoS flows. In this way, the transmission of the QoS flow with the largest PDB may be completed, thereby facilitating to complete the transmissions of other QoS flows on the first link.

32) A priority of the data transmitted on the first link.

In some embodiments, the higher the priority of the data, the higher the reliability requirement of the data transmission may be considered. Therefore, the timing duration of the timer may be set to be longer to increase the probability of successful data transmission.

In some embodiments, the data transmitted on the first link includes multiple QoS flows, and the priority of the data transmitted on the first link may be a highest priority among priorities of the multiple QoS flows.

33) A link quality of the first link.

In some embodiments, in a case where the link quality of the first link is good, it may be considered that the probability of the first link being disconnected in the short term is relatively small. Therefore, in this case, the timing duration of the timer may be set to be relatively long.

34) The number of relay terminal devices on the first link.

In some embodiments, the greater the number of the relay terminal devices on the first link (i.e., the greater the number of relay hops through which the data transmission passes), the greater the data for which the transmission has not been completed buffered on the first link may be considered. Therefore, in this case, the timing duration of the timer may be set to be relatively long, so that the transmission of the data for which the transmission has not been completed can be implemented as much as possible.

35) A congestion level of a resource pool.

In some embodiments, the higher the congestion level of the resource pool, the longer the duration required for the data transmission may be considered. Therefore, in this case, the timing duration of the timer may be set to be relatively long.

36) A resource allocation manner.

In some embodiments, the number of times of transmissions required for the data for which the transmission has not been completed may be estimated according to the resource allocation manner. Therefore, the timing duration of the timer may be set based on the estimated number of times of transmissions, so that the transmission of the data for which the transmission has not been completed can be implemented as much as possible.

In some embodiments, the timing duration of the timer may be configured by a network device, or determined by the first device.

In order to facilitate understanding of the embodiments of the present disclosure, possible implementation solutions of the method shown in FIG. 4 are described below with reference to examples. The solutions may be applied to the U2N relay scenario or the U2U relay scenario. In the solutions, the remote terminal device/network device may determine whether to perform an operation of disconnecting (disconnecting the source path) through the timer.

In the U2N scenario, in the first implementation (denoted as implementation#1), the remote terminal device may determine whether to perform the disconnection operation through the timer. In a second implementation (denoted as implementation#2), the network device may determine whether to perform the disconnection operation through the timer.

Hereinafter, the aforementioned implementation#1 and implementation#2 are described, respectively.

### Implementation#1

Exemplarily, the remote terminal device may start the timer when the remote terminal device meets a certain condition (denoted as condition#1). The condition#1 may include one or more of the following a) to c).
a) The remote terminal device receives the HO command (e.g., the RRCReconfiguration message) from the network device. That is to say, in the case where the remote terminal device receives the HO command from the network device, the remote terminal device may start the timer.

The RRCReconfiguration message may carry handover-related information. For example, the RRCReconfiguration message may include a following indication: in the intra-gNB handover scenario, switching from an indirect path to a direct path/indirect path. For another example, the RRCReconfiguration message may include a following indication: in the inter-gNB handover scenario, switching from the indirect path to the direct path/indirect path.
b) The remote terminal device successfully accesses the network device from the new path, or the remote terminal device successfully connects to the new path, for example, successfully sending the RRCReconfigurationComplete message. That is to say, in the case where the remote terminal device successfully accesses the network device from the new path, the remote terminal device may start the timer.
c) The remote terminal device receives a notification message from the relay terminal device. That is to say, in the case where the remote terminal device receives the notification message from the relay terminal device, the remote terminal device may start the timer.

In some embodiments, during the operation of the timer, the remote terminal device may stop sending uplink data on the source path, but may continue to receive downlink data.

In some embodiments, if the remote terminal device receives the downlink data on the source path, the remote terminal device may restart the timer, until the timer expires without receiving further downlink data, thus it is considered that there is no longer downlink data buffered in the intermediate node (the relay terminal device). In this case, the source path may be disconnected, or the remote terminal device may perform the disconnection operation of the source path.

### Implementation#2

Exemplarily, the network device may start the timer when the network device meets a certain condition (denoted as condition#2). The condition#2 may include one or more of the following d) to g).

d) The network device sends the HO command (e.g., the RRCReconfiguration message) to the remote terminal device. That is to say, the network device may start the timer in a case where the network device sends the HO command to the remote terminal device.

The RRCReconfiguration message may carry handover-related information. For example, the RRCReconfiguration message may include a following indication: in the intra-gNB handover scenario, switching from an indirect path to a direct path/indirect path. For another example, the RRCReconfiguration message may include a following indication: in the inter-gNB handover scenario, switching from the indirect path to the direct path/indirect path.
e) In the intra-gNB handover scenario, the network device receives the RRCReconfigurationComplete message from the remote terminal device. The RRCReconfigurationComplete message may be used for indicating that the remote terminal device has successfully accessed the network device from the new path. That is to say, in the case where the terminal device has successfully accessed the network device from the new path, the network device may start the timer.
f) In the inter-gNB handover scenario, the network device receives a handover request accept message from a target network device (target gNB). The handover request accept message may be used for indicating that the remote terminal device has successfully accessed the target network device. That is to say, the network device may start the timer in a case where the remote terminal device has successfully accessed the target network device.
g) The network device sends the RRCReconfiguration message to at least one relay terminal device, and the RRCReconfiguration message carries the handover-related information. That is to say, the network device may start the timer in a case where the network device sends the RRCReconfiguration message to the at least one relay terminal device.

In some embodiments, during the operation of the timer, the network device may stop sending downlink data on the source path, but may continue to receive uplink data.

In some embodiments, if the network device receives the uplink data on the source path, the network device may restart the timer, until the timer expires without receiving further downlink data, thus it is considered that there is no longer downlink data buffered in the intermediate node (the relay terminal device). In this case, the source path may be disconnected, or the network device may perform the disconnection operation of the source path.

In the U2U scenario, the remote terminal device (e.g., one of the remote terminal devices in the U2U scenario) may start the timer in the case where the relay reselection is determined to be performed.

In some embodiments, the timing duration of the timer (a value of the timer) may be configured by a network device, or obtained by the remote terminal device according to certain rules. Exemplarily, the timing duration of the timer may be associated with one or more of the following pieces of information.

A PDB of data transmitted on the source path, for example, a maximum value among PDBs of all QoS flows transmitted on the source path.

A priority of the data transmitted on the source path, for example, a highest priority among priorities of QoS flows transmitted on the source path.

A measurement of a link quality of the source path, and the timing duration of the timer may be set to be longer if the link quality is good.

The number of relay hops through which the data transmitted on the source path passes. For example, the larger number of the hops, the longer the timing duration of the timer may be set.

A congestion level of a resource pool. For example, the higher the congestion level, the longer the timing duration of the timer may be set.

A resource allocation manner.

According to the method of the embodiment, the remote terminal device/network device may continue to maintain the source connection for a period of time in the case of the occurrence or imminent occurrence of the state change of the first link. In this way, the transmission of the data buffered on the intermediate node (relay terminal device) may be completed as much as possible before the source path is disconnected, so as to avoid the data loss.

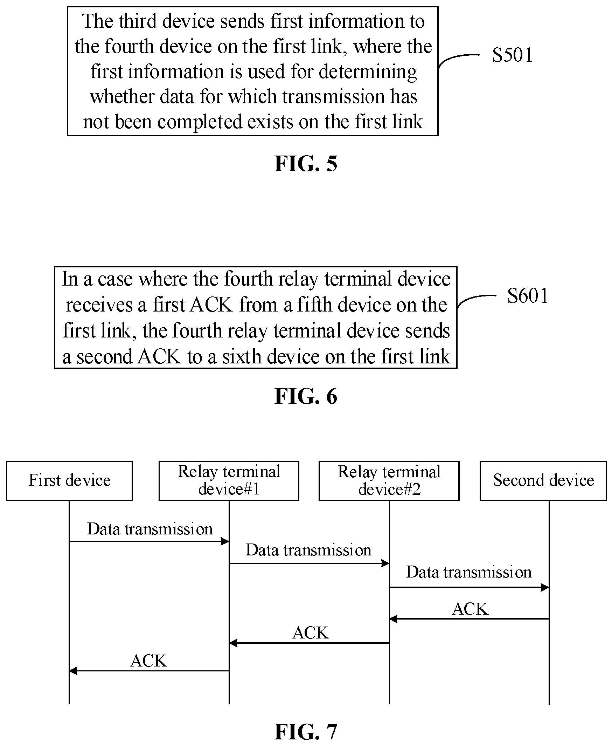

Another communication method provided by the embodiment of the present disclosure is described below in conjunction with FIG. 5.

FIG. 5 is a second schematic flowchart of a communication method according to an embodiment of the present disclosure. In this method, a first link on which the third device and fourth device are located includes a remote terminal device, a target device and one or more relay terminal devices between the remote terminal device and the target device. As shown in FIG. 5, the method may include a following operation S501.

In operation S501, the third device sends first information to the fourth device on the first link. The first information is used for determining whether data for which transmission has not been completed exists on the first link.

Correspondingly, the fourth device may receive the first information from the third device on the first link.

In the embodiment, the first information may be used for determining whether the data for which transmission has not been completed exists on the first link. The remote terminal device sending the data to the target device is taken as an example, the data for which transmission has not been completed may also be understood as the data that has been sent by the remote terminal device but not received by the target device. The target device sending the data to the remote terminal device is taken as an example, the data for which transmission has not been completed may also be understood as the data that has been sent by the target device but not received by the remote terminal device.

According to the method of the present embodiment, after the fourth device receives the first information, the fourth device may acquire, based on the first information, whether the data for which transmission has not been completed exists on the first link, thereby helping the fourth device to take measures to avoid the loss of the data for which transmission has not been completed.

In some embodiments, the third device may be a first relay terminal device on the first link. In this case, the first information may include: seventh indication information used for indicating a data volume of data to be sent by the first relay terminal device; and/or eighth indication information used for indicating whether the first relay terminal device has buffered the data to be sent. The first relay terminal device may be, for example, any one of relay terminal devices on the first link.

In some embodiments, the seventh indication information may include: the data volume of the data to be sent by the first relay terminal device (e.g., a data volume included in the RLC layer of the first relay terminal device), and an Identifier (ID) of the remote terminal device. The identifier of the remote terminal device is used for indicating that the data to be sent by the first relay terminal device is associated with the remote terminal device.

The data to be sent by the first relay terminal device is associated with the remote terminal device, which may include: the data to be sent is data to be sent to the remote terminal device; and/or the data to be sent is data from the remote terminal device. That is to say, in some embodiments, if the data to be sent by the first relay terminal device is to be sent to the remote terminal device, and/or if the data to be sent by the first relay terminal device is from the remote terminal device, the first relay terminal device may carry, in the seventh indication information, the data volume of the data to be sent and the identifier of the remote terminal device.

In some embodiments, the seventh indication information may further include: an index of a logical channel or an index of a logical channel group. The index of the logical channel is used for indicating that the data to be sent by the first relay terminal device is associated with the logical channel. The index of the logical channel group is used for indicating that the data to be sent by the first relay terminal device is associated with the logical channel group.

The data to be sent by the first relay terminal device is associated with the logical channel, which may include: the data to be sent by the first relay terminal device is to be sent through the logical channel, and/or the data to be sent by the first relay terminal device is from the logical channel. That is to say, in some embodiments, if the data to be sent by the first relay terminal device is to be sent through the logical channel, and/or if the data to be sent by the first relay terminal device is from the logical channel, the first relay terminal device may carry, in the seventh indication information, the index of the logical channel

The data to be sent by the first relay terminal device is associated with the logical channel group, which may include: the data to be sent by the first relay terminal device is to be sent through the logical channel group, and/or the data to be sent by the first relay terminal device is from the logical channel group. That is to say, in some embodiments, if the data to be sent by the first relay terminal device is to be sent through the logical channel group, and/or if the data to be sent by the first relay terminal device is from the logical channel group, the first relay terminal device may further carry, in the seventh indication information, the index of the logical channel group.

In some embodiments, the eighth indication information may include: a first parameter; and/or an identifier of the remote terminal device. The first parameter is used for indicating whether the first relay terminal device has buffered the data to be sent.

In some embodiments, in a case where the eighth indication information includes the first parameter and the first parameter indicates that the first relay terminal device has buffered the data to be sent, the identifier of the remote terminal device is used for indicating that the data to be sent is associated with the remote terminal device.

The data to be sent is associated with the remote terminal device, which may be understood as: the data to be sent is data to be sent to the remote terminal device; and/or the data to be sent is data from the remote terminal device. That is to say, in some embodiments, if the data to be sent buffered by the first relay terminal device is to be sent to the remote terminal device, and/or if the data to be sent buffered by the first relay terminal device is from the remote terminal device, the first relay terminal device may carry, in the eighth indication information, the first parameter and the identifier of the remote terminal device.

In some embodiments, in a case where the eighth indication information does not include the first parameter, the identifier of the remote terminal device is used for indicating that the first relay terminal device has buffered the data to be sent and the data to be sent is associated with the remote terminal device.

In some embodiments, the eighth indication information includes the identifier of the remote terminal device, and further includes: an index of a logical channel or an index of a logical channel group. In a case where the first relay terminal device has buffered the data to be sent, the index of the logical channel is used for indicating that the data to be sent is associated with the logical channel; and the index of the logical channel group is used for indicating that the data to be sent is associated with the logical channel group.

The data to be sent is associated with the logical channel, which may include: the data to be sent is to be sent through the logical channel, and/or the data to be sent is from the logical channel. That is to say, in some embodiments, if the data to be sent buffered by the first relay terminal device is to be sent through the logical channel, and/or if the data to be sent buffered by the first relay terminal device is from the logical channel, the first relay terminal device may carry, in the eighth indication information, the index of the logical channel.

The data to be sent is associated with the logical channel group, which may include: the data to be sent is to be sent through the logical channel group, and/or the data to be sent is from the logical channel group. That is to say, in some embodiments, if the data to be sent buffered by the first relay terminal device is to be sent through the logical channel group, and/or if the data to be sent buffered by the first relay terminal device is from the logical channel group, the first relay terminal device may further carry, in the eighth indication information, the index of the logical channel group.

In some embodiments, in a case where the third device is the first relay terminal device on the first link, the fourth device may be: a remote terminal device; or a target device; or a relay terminal device adjacent to the first relay terminal device that is on the first link.

In an example, the fourth device is the remote terminal device. In this case, after the remote terminal device receives the first information from the first relay terminal device, the remote terminal device may acquire that the first relay terminal device has buffered the data to be sent to the remote terminal device. In this case, in order to avoid the data loss, the remote terminal device may maintain the connection with the first relay terminal device. For example, in a scenario where the remote terminal device performs the handover, if the remote terminal device acquires, based on the first information, that the first relay terminal device has buffered the data to be sent to the remote terminal device, the remote terminal device may maintain the connection with the first relay terminal device for a period of time before the disconnection, so that the first relay terminal device is able to successfully send the data to be sent to the remote terminal device within the period of time.

In another example, the fourth device is the target device. In this case, after the target device receives the first information from the first relay terminal device, the target device may acquire that the first relay terminal device has buffered the data to be sent to the remote terminal device; or may acquire that the first relay terminal device has buffered the data from the remote terminal device. In this case, if the target device acquires, based on the first information, that the first relay terminal device has buffered the data to be sent to the remote terminal device, the target device may instruct the remote terminal device to maintain the connection with the first relay terminal device for a period of time before the disconnection, so that the first relay terminal device is able to successfully send the data to be sent to the remote terminal device within the period of time. If the target device acquires, based on the first information, that the first relay terminal device has buffered the data from the remote terminal device, the target device may maintain the connection with the first relay terminal device for a period of time before the disconnection, so that the first relay terminal device is able to successfully send the data from the remote terminal device to the target device within the period of time.

For another example, the fourth device is a relay terminal device adjacent to the first relay terminal device that is on the first link (for example, the fourth device is referred to as an adjacent relay terminal device). In this case, after the adjacent relay terminal device receives the first information from the first relay terminal device, the adjacent relay terminal device may acquire that the first relay terminal device has buffered the data to be sent to the remote terminal device; or may acquire that the first relay terminal device has buffered the data from the remote terminal device. In this case, the adjacent relay terminal device may maintain the connection with the first relay terminal device, so that the transmission of the data buffered by the first relay terminal device is normally performed.

In some embodiments, the third device may be a remote terminal device, and the fourth device may be a target device. In this case, the first information may include ninth indication information. The ninth indication information is used for indicating data that has been sent by the remote terminal device to the target device, and/or, data that has been received by the remote terminal device from the target device.

In some embodiments, in the case where the ninth indication information is used for indicating the data that has been sent by the remote terminal device to the target device, the ninth indication information may include: an index (e.g., a PDCP Sequence Number (SN)) of the data that has been sent by the remote terminal device to the target device. In the case where the ninth indication information is used for indicating the data that has been received by the remote terminal device from the target device, the ninth indication information may include an index (e.g., the PDCP SN) of the data that has been received by the remote terminal device from the target device.

According to the method of the present embodiment, after the target device receives the first information from the remote terminal device, the target device is able to acquire the data that has been sent by the remote terminal device to the target device and/or the data that has been received by the remote terminal device from the target device. If the target device acquires the data that has been sent by the remote terminal device to the target device, the target device is able to infer the data that has been sent by the remote terminal device but not received by the target device. In this case, the target device may instruct the remote terminal device to perform the repetition of the data that is not received by the target device, to avoid the data loss. If the target device acquires the data that has been received by the remote terminal device from the target device, the target device is able to infer the data that has been sent by the target device but not received by the remote terminal device. In this case, the target device may perform the repetition of the data that is not received by the remote terminal device, to avoid the data loss.

In some embodiments, the third device may be a target device and the fourth device may be a remote terminal device. In this case, the first information may include tenth indication information. The tenth indication information is used for indicating data that has been sent by the target device to the remote terminal device, and/or, data that has been received by the target device from the remote terminal device.

In some embodiments, in the case where the tenth indication information is used for indicating the data that has been sent by the target device to the remote terminal device, the tenth indication information may include: an index (e.g., PDCP SN) of the data that has been sent by the target device to the remote terminal device. In the case where the tenth indication information is used for indicating the data that has been received by the target device from the remote terminal device, the tenth indication information may include an index (e.g., PDCP SN) of the data that has been received by the target device from the remote terminal device.

According to the method of the present embodiment, after the remote terminal device receives the first information from the target device, the remote terminal device is able to acquire the data that has been sent by the target device to the remote terminal device and/or the data that has been received by the target device from the remote terminal device. If the remote terminal device acquires the data that has been sent by the target device to the remote terminal device, the remote terminal device is able to infer the data that has been sent by the target device but not received by the remote terminal device. In this case, the remote terminal device may instruct the target device to perform the repetition of the data that is not received by the remote terminal device, to avoid the data loss. If the remote terminal device acquires the data that has been received by the target device from the remote terminal device, the remote terminal device is able to infer the data that has been sent by the remote terminal device but not received by the target device. In this case, the remote terminal device may perform the repetition of the data that is not received by the target device, to avoid the data loss.

In some embodiments, the first information is sent by the third device to the fourth device in a case where the third device receives request information.

As an example, in a case where the third device is the remote terminal device, the request information may be from the target device. That is to say, the target device may send the request information to the remote terminal device, and correspondingly, the remote terminal device may receive the request information. Furthermore, the remote terminal device may send the first information to the fourth device (e.g., the target device) in response to the request information.

As another example, in a case where the third device is the first relay terminal device on the first link, the request information may be from, for example, a remote terminal device or a target device. That is to say, the remote terminal device or the target device may send the request information to the first relay terminal device, and correspondingly, the first relay terminal device may receive the request information. Furthermore, the first relay terminal device may send the first information to the fourth device (e.g., the remote terminal device or the target device) in response to the request information.

As an example, in a case where the third device is the target device, the request information may be from, for example, the remote terminal device. That is to say, the remote terminal device may send the request information to the target device, and correspondingly, the target device may receive the request information. Furthermore, the first relay terminal device may send the first information to the fourth device (e.g., the remote terminal device or the target device) in response to the request information.

In some embodiments, for the fourth device, before the fourth device receives the first information from the third device on the first link, the method may further include: the fourth device sends the request information to the third device. The request information is used for requesting the first information.

As an example, in a case where the fourth device is the remote terminal device, the third device may be the target device or the first relay terminal device on the first link. That is to say, the remote terminal device may send the request information to the target device or the first relay terminal device, to request the first information.

As another example, in a case where the fourth device is the target device, the third device may be the remote terminal device or the first relay terminal device on the first link. That is to say, the target device may send the request information to the remote terminal device or the first relay terminal device, to request the first information.

In some embodiments, in a case where the fourth device is the remote terminal device, for example, the request information may be sent by the remote terminal device to the third device in the case where the remote terminal device meets the fourth condition.

As an example, the fourth condition may include one or more of following 41) to 43).
41) The remote terminal device receives a first handover command from a network device, and the first handover command is used for instructing the remote terminal device to switch to another link from the first link.
42) Quality of a link between the remote terminal device and a second relay terminal device is lower than a first threshold, and the second relay terminal device is a relay terminal device on the first link that is directly connected to the remote terminal device.
43) The remote terminal device receives thirteenth indication information from a third relay terminal device on the first link, and the thirteenth indication information is used for indicating occurrence of a state change of a link between the third relay terminal device and an adjacent device on the first link.

The third relay terminal device may be, for example, any one of relay terminal devices on the first link.

In some embodiments, the occurrence of the state change of the link between the third relay terminal device and the adjacent device on the first link includes any one of:
a radio link failure occurs on the link between the third relay terminal device and the adjacent device; quality of the link between the third relay terminal device and the adjacent device is lower than a first threshold; a link handover occurs for the third relay terminal device; or a cell handover occurs for the third relay terminal device.

Herein, the link between the third relay terminal device and the adjacent device may be, for example, the Uu link or the PC5 link. Taking the communication scenario shown in FIG. 3 as an example, if the third relay terminal device is the relay terminal device#1, the link between the relay terminal device#1 and the adjacent device may be, for example, the PC5 link between the relay terminal device#1 and the remote terminal device; or may be the PC5 link between the relay terminal device#1 and the relay terminal device#2. If the third relay terminal device is the relay terminal device#2, the link between the relay terminal device#2 and the adjacent device may be, for example, the PC5 link between the relay terminal device#2 and the relay terminal device#1; or may be the Uu link between the relay terminal device#2 and the target device (it is assumed that the target device is the network device).

According to the method of the present embodiment, when the fourth condition is met, it may indicate that the state change of the first link has occurred or is about to occur, or it may indicate that a risk of the data loss for the data for which the transmission has not been completed may exist on the first link due to the disconnection of the first link. Therefore, in the case where the fourth condition is met, the fourth device (the remote terminal device) may send the request information to the third device, to request the first information. The first information assists the fourth device in taking measures to avoid the loss of the data for which the transmission has not been completed.

In some embodiments, in the case where the fourth device is a target device and the target device is a network device, the request information may be sent by the network device to the third device, for example, in the case where the network device meets the fifth condition.

As an example, the fifth condition may include: the network device sends a first handover command to the remote terminal device, and the first handover command is used for instructing the remote terminal device to switch to another link from the first link; and/or the network device sends a second handover command to at least one relay terminal device on the first link, and the second handover command sent to the relay terminal device is used for instructing the relay terminal device to perform a link handover.

In some scenarios, the network device sends the first handover command to the remote terminal device, which may include a situation before the network device sends the first handover command to the remote terminal device, e.g., the network device has determined/decided to send the first handover command to the remote terminal device but has not sent the first handover command. In some scenarios, the network device sends the first handover command to the remote terminal device, which may further include a situation when the network device sends the first handover command to the remote terminal device or a situation where the network device has sent the first handover command to the remote terminal device.

In some scenarios, the network device sends the second handover command to the at least one relay terminal device on the first link, which may include a situation before the network device sends the second handover command to the at least one relay terminal device, e.g., the network device has determined/decided to send the second handover command to the at least one relay terminal device but has not sent the second handover command. In some scenarios, the network device sends the second handover command to the at least one relay terminal device on the first link, which may further include a situation when the network device sends the second handover command to the at least one relay terminal device or a situation where the network device has sent the second handover command to the at least one relay terminal device.

In some embodiments, the request information may include the identifier of the remote terminal device. In this way, after the third device receives the request information, the third device may send, based on the identifier of the remote terminal device carried in the request information, the first information associated with the remote terminal device to the fourth device.

For example, based on the identifier of the remote terminal device carried in the request information, the third device (e.g., the first relay terminal device) may carry, in the seventh indication information, the data volume of the data to be sent by the first relay terminal device and the identifier of the remote terminal device. For another example, based on the identifier of the remote terminal device carried in the request information, the third device (e.g., the first relay terminal device) may carry, in the eighth indication information, a first parameter and the identifier of the remote terminal device, or the identifier of the remote terminal device. For another example, the third device (e.g., the remote terminal device) may send, based on the identifier of the remote terminal device (i.e., the identifier of the third device) carried in the request information, ninth indication information to the fourth device. The ninth indication information is used for indicating data that has been sent by the remote terminal device to the target device, and/or, data that has been received by the remote terminal device from the target device. For another example, the third device (e.g., the target device) may send, based on the identifier of the remote terminal device carried in the request information, tenth indication information to the fourth device. The tenth indication information is used for indicating data that has been sent by the target device to the remote terminal device, and/or data that has been received by the target device from the remote terminal device.

In some embodiments, the request information may further include: an index of a logical channel or an index of a logical channel group. In this way, after the third device receives the request information, the third device may send, based on the index of the logical channel or the index of the logical channel group carried in the request information, the first information associated with the index of the logical channel or the index of the logical channel group to the fourth device.

For example, based on the index of the logical channel or the index of the logical channel group carried in the request information, the third device (e.g., the first relay terminal device) may further carry, in the seventh indication information, the index of the logical channel or the index of the logical channel group. For another example, based on the index of the logical channel or the index of the logical channel group carried in the request information, the third device (e.g., the first relay terminal device) may further carry, in the eighth indication information, the index of the logical channel or the index of the logical channel group.

In some embodiments, a period for the third device to send the first information to the fourth device is a first time interval. That is to say, the third device may periodically send the first information to the fourth device by using the first time interval as a sending period.

In some embodiments, the first time interval is configured by the network device. Alternatively, the first time interval is preconfigured. Alternatively, the first time interval is configured by any one of relay terminal devices on the first link. Alternatively, the first time interval is configured by the remote terminal device.

In some implementations, the first time interval may be associated with one or more of the following pieces of information 51) to 54).

51) The number of relay terminal devices on the first link.

In some embodiments, the greater the number of the relay terminal devices on the first link (i.e., the greater the number of relay hops through which the data transmission passes), the higher the probability that the data for which the transmission has not been completed exists on the first link may be considered. Therefore, in this case, the first time interval may be set to be relatively short, so that the frequency at which the third device sends the first information to the fourth device is higher, thereby reducing the risk of the data loss.

52) A priority of the data transmitted on the first link.

In some embodiments, the higher the priority of the data, the higher the reliability requirement of the data transmission may be considered. Therefore, the first time interval may be set to be relatively short, so that the frequency at which the third device sends the first information to the fourth device is higher, thereby reducing the risk of the data loss.

53) A congestion level of a resource pool.

In some embodiments, the higher the congestion level of the resource pool, the higher the probability that the data for which the transmission has not been completed exists on the first link may be considered. Therefore, in this case, the first time interval may be set to be relatively short, so that the frequency at which the third device sends the first information to the fourth device is higher, thereby reducing the risk of the data loss.

54) A QoS parameter.

As an example, the QoS parameter may include, for example, a Packet Error Rate (PER) and/or a PDB of the data transmitted on the first link.

In some embodiments, a smaller PER may indicate a higher reliability requirement of the data transmission. Therefore, the first time interval may be set to be relatively short, so that the frequency at which the third device sends the first information to the fourth device is higher, thereby reducing the risk of the data loss.

In some embodiments, since the data exceeding the PDB is invalid during the data transmission procedure, the first time interval may be less than the PDB.

In some embodiments, in a case where the third device is the remote terminal device, for example, the first information may be sent by the remote terminal device to the fourth device in the case where the remote terminal device meets the first condition.

As an example, the first condition may include one or more of followings.

The remote terminal device receives a first handover command from a network device, and the first handover command is used for instructing the remote terminal device to switch to another link from the first link.

Quality of a link between the remote terminal device and a second relay terminal device is lower than a first threshold, and the second relay terminal device is a relay terminal device on the first link that is directly connected to the remote terminal device.

The remote terminal device receives eleventh indication information from a first relay terminal device on the first link, and the eleventh indication information is used for indicating occurrence of a state change of a link between the first relay terminal device and an adjacent device on the first link.

The first relay terminal device may be, for example, any one of relay terminal devices on the first link.

In some embodiments, the occurrence of the state change of the link between the first relay terminal device and the adjacent device on the first link includes any one of: a radio link failure occurs on the link between the first relay terminal device and the adjacent device; quality of the link between the first relay terminal device and the adjacent device is lower than a first threshold; a link handover occurs for the first relay terminal device; or a cell handover occurs for the first relay terminal device.

Herein, the link between the first relay terminal device and the adjacent device may be, for example, the Uu link or the PC5 link.

According to the method of the present embodiment, when the first condition is met, it may indicate that the state change of the first link has occurred or is about to occur, or it may indicate that a risk of the data loss for the data for which the transmission has not been completed may exist on the first link due to the disconnection of the first link. Therefore, in the case where the first condition is met, the third device (the remote terminal device) may send the first information to the fourth device. The first information assists the fourth device in taking measures to avoid the loss of the data for which the transmission has not been completed.

In some embodiments, in the case where the third device is the first relay terminal device on the first link, the first information may be sent by the first relay terminal device to the fourth device in a case where that the first relay terminal device meets a second condition.

As an example, the second condition may include occurrence of a state change of a link between the first relay terminal device and an adjacent device on the first link; and/or first relay terminal device receives twelfth indication information from the target device, and the twelfth indication information is used for indicating release of a connection between the first relay terminal device and the target device.

The first relay terminal device may be, for example, any one of relay terminal devices on the first link.

In some embodiments, the occurrence of the state change of the link between the first relay terminal device and the adjacent device on the first link includes any one of: a radio link failure occurs on the link between the first relay terminal device and the adjacent device; quality of the link between the first relay terminal device and the adjacent device is lower than a first threshold; a link handover occurs for the first relay terminal device; or a cell handover occurs for the first relay terminal device.

According to the method of the present embodiment, when the first condition is met, it may indicate that the state change of the first link has occurred or is about to occur, or it may indicate that a risk of the data loss for the data for which the transmission has not been completed may exist on the first link due to the disconnection of the first link. Therefore, in the case where the first condition is met, the third device (the first relay terminal device) may send the first information to the fourth device. The first information assists the fourth device in taking measures to avoid the loss of the data for which the transmission has not been completed.

In some embodiments, in the case where the third device is a target device and the target device is a network device, the first information may be sent by the network device to the fourth device, for example, in the case where the network device meets the third condition.

As an example, the third condition may include: the network device sends a first handover command to the remote terminal device; and/or the network device sends a second handover command to at least one relay terminal device on the first link.

The first handover command is used for instructing the remote terminal device to switch to another link from the first link. The second handover command sent to the relay terminal device is used for instructing the relay terminal device to perform a link handover.

In some scenarios, the network device sends the first handover command to the remote terminal device, which may include a situation before the network device sends the first handover command to the remote terminal device. That is to say, the network device has determined/decided to send the first handover command to the remote terminal device but has not sent the first handover command. In some scenarios, the network device sends the first handover command to the remote terminal device, which may further include a situation when the network device sends the first handover command to the remote terminal device or a situation where the network device has sent the first handover command to the remote terminal device.

In some scenarios, the network device sends the second handover command to the at least one relay terminal device on the first link, which may include a situation before the network device sends the second handover command to the at least one relay terminal device. That is to say, the network device has determined/decided to send the second handover command to the at least one relay terminal device but has not sent the second handover command. In some scenarios, the network device sends the second handover command to the at least one relay terminal device on the first link, which may further include a situation when the network device sends the second handover command to the at least one relay terminal device or a situation where the network device has sent the second handover command to the at least one relay terminal device.

In some embodiments, the first information may be carried, for example, by one of: RRC signaling; PDCP Status Report (SR); A Media Access Control (MAC) Control unit (MAC CE); RLC control Protocol Data Unit (PDU); or an SRAP control PDU.

In some embodiments, the target device in the embodiments of the present disclosure may be the network device or the terminal device (e.g., another remote terminal device).

In order to facilitate understanding of the embodiments of the present disclosure, possible implementation solutions of the method shown in FIG. 5 are described below with reference to examples. The solutions may be applied to the U2N relay scenario or the U2U relay scenario. The U2N relay scenario is taken as an example below to perform the exemplary illustration.

In the solutions, the data transmission situation between the remote terminal device and the network device may be determined by the transmission of data status information (corresponding to the first information in the method shown in FIG. 5).

In some embodiments, the transmission of the data status information includes, for example, the following cases:
transmission from a relay terminal device (relay node) to a remote terminal device (for example, transmission from each relay terminal device to the remote terminal device; for another example, transmission from a relay terminal device closest to a counterpart to the remote terminal device);
transmission from one relay terminal device to another relay terminal device (for example, transmission from one relay terminal device to a relay terminal device adjacent to the relay terminal device);
transmission from a relay terminal device to a network device (for example, transmission from each relay terminal device to the network device; for another example, transmission from a relay terminal device closest to a counterpart to the network device);
transmission from a remote terminal device to a network device; or
transmission from a network device to a remote terminal device.

In some embodiments, the data status information may be carried, for example, in one of the following: RRC signaling; PDCP SR; an MAC CE; an RLC control PDU; or an SRAP control PDU.

In some embodiments, the data status information may include one or more of the following information: data volume information (corresponding to the seventh indication information in the aforementioned embodiment); data sending status information (corresponding to the ninth/tenth indication information in the aforementioned embodiment); or indication information (corresponding to the eighth indication information in the aforementioned embodiment) for indicating that the current device has buffered the data that has not been sent completely. Each of pieces of the aforementioned information is introduced below.

### Data volume information.

Exemplarily, the data volume information may be carried in, for example, the data status information transmitted by the relay terminal device to the remote terminal device, or may be carried in data status information transmitted by the relay terminal device to the network device, or may be carried in data status information transmitted by one relay terminal device to another relay terminal device.

The data volume information may include, for example, a data volume included in the RLC layer.

It is to be noted that, in the current SL mode-2 resource acquisition manner, the RLC layer does not contain the data volume, so it is necessary to introduce a new data volume calculation purpose (for example, calculating the data volume in order to relay the data status information in the scenario) to obtain the data volume of the RLC layer.

In some embodiments, the data volume may be, for example, data volume associated with per-remote-UE. For example, in the U2N relay scenario in the embodiment, the data volume may include a data volume associated with the remote terminal device in the U2N relay scenario. In this case, the data volume information may further include an ID (such as an L2 ID or a local UE ID) of the remote terminal device associated with the data volume.

In some embodiments, the data volume may be, for example, data volume associated with per-remote UE-per-LCH. For example, in the U2N relay scenario in the embodiment, the data volume may include a data volume associated with each LCH of the remote terminal device in the U2N relay scenario. In this case, the data volume information may further include an ID (such as an L2 ID or a local UE ID) of the remote terminal device associated with the data volume and an index of an LCH (e.g., an LCH on the Uu or the PC5 link) of the remote terminal device associated with the data volume.

In some embodiments, the data volume may be, for example, data volume associated with per-remote UE-per-LCG. For example, in the U2N relay scenario in the embodiment, the data volume may include a data volume associated with each LCG of the remote terminal device in the U2N relay scenario. In this case, the data volume information may further include an ID (such as an L2 ID or a local UE ID) of the remote terminal device associated with the data volume and an index of an LCG (e.g., an LCG on the Uu or the PC5 link) of the remote terminal device associated with the data volume.

### Data sending status information

For example, the data sending status information may be carried in, for example, data status information transmitted by the remote terminal device to the network device, or may be carried in data status information transmitted by the network device to the remote terminal device.

The data sending status information may include, for example, a status identification, e.g., a PDCP SN, of data that has currently sent/received by the current device (the device that generates the data status information).

Indication information for indicating that the current device has buffered the data that has not been sent completely

In a possible implementation, the indication information may for example, explicitly indicate whether the current device (the device that generates the data status information) has buffered the data that has not been sent completely. For example, the indication information may include a first parameter, and the first parameter may be used for indicating whether the current device has buffered the data that has not been sent completely.

In another possible implementation, the indication information may for example, implicitly indicate whether the current device has buffered the data that has not been sent completely. For example, the indication information may include an ID (such as an L2 ID or a local UE ID) of the remote terminal device. The ID of the remote terminal device may be used for indicating that the current device has buffered the data that has not been sent completely, and the data that has not been sent completely is associated with the remote terminal device. In some embodiments, the indication information may further include: an index of the LCH or an index of the LCG. The index of the LCH may be used for indicating that: the data that has not been sent completely is associated with the LCH; and the index of the LCG may be used for indicating that the data that has not been sent completely is associated with the LCG.

In yet another possible implementation, the indication information may include both the first parameter and the ID of the remote terminal device. In this case, if the first parameter indicates that the current device has buffered the data that has not been sent completely, the ID of the remote terminal device may be used for indicating that the data that has not been sent completely is associated with the remote terminal device. In some embodiments, the indication information may further include: an index of the LCH or an index of the LCG. If the first parameter indicates that the current device has buffered the data that has not been sent completely, the index of the LCH may be used for indicating that: the data that has not been sent completely is associated with the LCH; and the index of the LCG may be used for indicating that the data that has not been sent completely is associated with the LCG.

In some embodiments, the trigger condition of the data status information may be: being triggered based on a request. For example, when request information (corresponding to the request information in the aforementioned embodiment) for the data status information is received, the data status information is sent. Exemplarily, the request information may be from a remote terminal device and/or a network device, and the request information may include, for example: ID information of the remote terminal device associated with the requested data status information; LCH information (such as an index of the LCH ) associated with the requested data status information; or LCG information (e.g., index of the LCG ) associated with the requested data status information.

In some embodiments, the remote terminal device may trigger the sending of the request information when one or more of the following conditions 1) to 3) are met.
1) The remote terminal device receives a handover command from the network.
2) The remote terminal device receives, from the relay terminal device, the PC5-RRC/PC5-S signaling for indicating that the change or the state change of the Uu/PC5 link for relaying occurs (for example, the HO, the cell reselection, the RLF, the link quality being lower than a certain threshold, etc. occurs).
3) The PC5 link quality between the remote terminal device and the relay terminal device is lower a certain threshold (e.g. lower than the first threshold).

In some embodiments, the network device may trigger the sending of the request information when one or more of the following conditions are met:
when the network device sends the handover command to the remote terminal device or before the network device sends the handover command to the remote terminal device; or
when the network device sends the handover command to the at least one relay terminal device or before the network device sends the handover command to the at least one relay terminal device.

In some embodiments, the trigger condition of the data status information may be: being triggered periodically. Exemplarily, the triggered period may be configured by the network, pre-configured, configured by the relay terminal device, or configured by the remote terminal device. In some embodiments, the period may be associated with the number of the relay hops, the priority of the data transmission, the congestion lever of the resource pool, a QoS parameter (e.g., PDB, PER), etc.

In some embodiments, the trigger condition of the data status information may be: being triggered based on an event.

Exemplarily, an event that triggers the remote terminal device to send the data status information may include one or more of the following 1) to 3).
1) The remote terminal device receives a handover command from the network.
2) The remote terminal device receives, from the relay terminal device, the PC5-RRC/PC5-S signaling for indicating that the change or the state change of the Uu/PC5 link for relaying occurs (for example, the HO, the cell reselection, the RLF, the link quality being lower than a certain threshold, etc. occurs).
3) The PC5 link quality between the remote terminal device and the relay terminal device is lower a certain threshold (e.g. lower than the first threshold).

Exemplarily, an event that triggers the relay terminal device to send the data status information may include one or more of the following 1) to 3).
1) The change or the state change of the Uu link of the relay terminal device occurs (for example, the Uu RLF, HO, cell reselection, link quality being lower than a certain threshold occurs, etc.).
2) The relay terminal device receives the connection release message from the network device.
3) The change/state change (such as the RLF, the link quality being lower than a certain threshold, or the PC5 connection release) of the PC5 link of the relay terminal device occurs.

Exemplarily, an event that triggers the network device to send the data status information may include one or more of the following 1) to 2).
1) When the network device sends the handover command to the remote terminal device or before the network device sends the handover command to the remote terminal device.
2) When the network device sends the handover command to the at least one relay terminal device or before the network device sends the handover command to the at least one relay terminal device.

In some embodiments, if the data status information is the PDCP or RRC layer signaling, the data status information may be sent in an end-to-end form, i.e., the data status information is directly sent by the entity (device) that generates the data status information to the target entity.

In some embodiments, if the data status information is the RLC/SRAP/MAC layer signaling, a hop-to-hop forwarding manner may be adopted, i.e., the entity that generates the data status information sends the data status information to an intermediate node, and the intermediate node then forwards the data status information. Exemplarily, the intermediate node may perform forwarding based on one of the following manners 1) or 3).
1) Forwarding directly without processing.
2) Forwarding after modifying the header. For example, ID information (such as the source end/target end) and data identification information (such as logical channel identification, etc.) in the packet header are modified and then the forwarding is performed.
3) Forwarding after further integrating contents. For example, after the current device receives the data status information from the previous hop device, the current device may integrate the data status information from the previous hop device and the data status information generated by the current device itself into one piece of signaling, and then send the integrated signaling to the next hop device.

Another communication method provided by the embodiment of the present disclosure is described below in conjunction with FIG. 6.

FIG. 6 is a third schematic flowchart of a communication method according to an embodiment of the present disclosure. In the method, the fourth relay terminal device is located on a first link between a first remote terminal device and a target device. One or more relay terminal devices are present on the first link. As shown in FIG. 6, the method may include a following operation S601.

In operation S601, in a case where the fourth relay terminal device receives a first ACK from a fifth device on the first link, the fourth relay terminal device sends a second ACK to a sixth device on the first link.

The fifth device is a next hop device of the fourth relay terminal device in a data transmission direction, and the sixth device is a previous hop device of the fourth relay terminal device in the data transmission direction. The first ACK is used for indicating that the fifth device has successfully received first data from the fourth relay terminal device; and the second ACK is used for indicating that the fourth relay terminal device has successfully received the first data from the sixth device.

Taking the communication scenario shown in FIG. 3 as an example, the first remote terminal device may be the remote terminal device in FIG. 3, and the target device may be the target device in FIG. 3.

For example, the fourth relay terminal device may be the relay terminal device#1 in FIG. 3, in this case, if the data transmission direction is from the remote terminal device (the first remote terminal device) to the target device, the fifth device (the next hop device of the fourth relay terminal device in the data transmission direction) is the relay terminal device#2, and the sixth device (the previous hop device of the fourth relay terminal device in the data transmission direction) is the remote terminal device. If the data transmission direction is from the target device to the remote terminal device (first remote terminal device), the fifth device (the next hop device of the fourth relay terminal device in the data transmission direction) is the remote terminal device, and the sixth device (the previous hop device of the fourth relay terminal device in the data transmission direction) is the relay terminal device#2.

In another example, the fourth relay terminal device may be the relay terminal device#2 in FIG. 3, in this case, if the data transmission direction is from the remote terminal device (the first remote terminal device) to the target device, the fifth device (the next hop device of the fourth relay terminal device in the data transmission direction) is the target device, and the sixth device (the previous hop device of the fourth relay terminal device in the data transmission direction) is the relay terminal device#1. If the data transmission direction is from the target device to the remote terminal device (first remote terminal device), the fifth device (the next hop device of the fourth relay terminal device in the data transmission direction) is the relay terminal device#1, and the sixth device (the previous hop device of the fourth relay terminal device in the data transmission direction) is the target device.

In some embodiments, before the fourth relay terminal device sends the second ACK to the sixth device on the first link, the method may further include: the fourth relay terminal device receives first data from the sixth device and sends the first data to the fifth device.

That is to say, the transmission of the first data may be from the sixth device to the fourth relay terminal device, and then forwarded by the fourth relay terminal device to the fifth device. Furthermore, if the fourth relay terminal device receives the first ACK from the fifth device, the fourth relay terminal device may feed the second ACK back to the sixth device. In this way, in the case where the sixth device receives the second ACK from the fourth relay terminal device, the sixth device may acquire that the transmission of the first data has been successfully performed to the fifth device, thereby ensuring reliability and continuity of the first data during the transmission procedure and avoiding loss of the first data.

For convenience of description, hereinafter, the feedback manner where the fourth relay terminal device sends the second ACK to the sixth device when the fourth relay terminal device receives the first ACK from the fifth device is referred to as a first feedback mode.

In some embodiments, the method may further include: in the case where the fourth relay terminal device receives a Negative ACKnowledgement (NACK) from the fifth device, the fourth relay terminal device performs the repetition of the first data to the fifth device. The NACK from the fifth device is used for indicating that the fifth device has not successfully received the first data from the fourth relay terminal device.

That is to say, if the fourth relay terminal device receives the NACK from the fifth device, the fourth relay terminal device may perform the repetition of the first data to the fifth device. If the repetition is successful and the first ACK from the fifth device is received, the second ACK may be fed back to the sixth device.

In some embodiments, the maximum repetition number of the repetitions of the first data performed by the fourth relay terminal device to the fifth device may be less than or equal to a first value, and the maximum repetition number may be configured by the network device.

Since the aforementioned technical solution increases the transmission reliability of the first data and also increases the transmission delay of the first data to a certain extent, the transmission delay of the first data can be reduced by limiting the maximum repetition number of the repetitions of the first data to be within the first value.

In some embodiments, in the case where the fourth relay terminal device receives the first ACK from the fifth device on the first link, the fourth relay terminal device sends the second ACK to the sixth device on the first link, which includes: if the first condition is met, the fourth relay terminal device sends the second ACK to the sixth device in the case where the fourth relay terminal device receives the first ACK from the fifth device. The first condition includes allowing transmission of the first data using a first feedback mode, and the first feedback mode for the first data being activated.

Since the aforementioned technical solution increases the transmission reliability of the first data and also increases the transmission delay of the first data to a certain extent, it is possible to add the condition limitation on the transmission of the first data performed by adopting the aforementioned technical solution (first feedback mode). For example, if the first condition is met, the transmission of the first data may be performed using the first feedback mode. That is to say, if the first condition is met, the fourth relay terminal device may send the second ACK to the sixth device in the case where the fourth relay terminal device receives the first ACK from the fifth device. Accordingly, if the first condition is not met, it is not necessary to perform the transmission of the first data in the first feedback mode. That is to say, if the first condition is not met, the fourth relay terminal device does not need to send the second ACK to the sixth device in the case where the fourth relay terminal device receives the first ACK from the fifth device, but may perform the transmission of the first data in the general feedback mode (i.e., if the fourth relay terminal device successfully receives the first data from the sixth device, and then the fourth relay terminal device is able to send the second ACK to the sixth device), to reduce the transmission delay of the first data.

In some embodiments, in a case where the target device is a network device, whether to allow the transmission of the first data using the first feedback mode is determined based on first information from the network device; and whether the first feedback mode for the first data is activated is determined based on second information from the network device or the first remote terminal device.

In some embodiments, in a case where the target device is a second remote terminal device, whether to allow the transmission of the first data using the first feedback mode is determined based on first information from the network device; and whether the first feedback mode for the first data is activated is determined based on the second information from the first remote terminal device or the second remote terminal device.

According to the method in the embodiment, whether to allow the transmission of the first data using the first feedback mode may be determined/configured through the first information, and whether the first feedback mode for the first data is activated may be further determined/configured through the second information. Furthermore, if the first data is determined/configured to allow the transmission using the first feedback mode, and the first feedback mode for the first data is activated, the fourth relay terminal device may perform the transmission of the first data using the first feedback mode, i.e., the fourth relay terminal device may send the second ACK to the sixth device in the case where the fourth relay terminal device receives the first ACK from the fifth device.

In some embodiments, the first information may be, for example, an RRC configuration.

In some embodiments, the second information may be, for example, any one of: an MAC CE; a PDCP control PDU; an RLC control PDU; or an SRAP control PDU.

In some embodiments, the first data may be any one of: a Signalling Radio Bearer (SRB); a Data Radio Bearer (DRB); an RLC bearer; a RLC channel; or a logical channel.

In some embodiments, all or a part of relay terminal devices on the first link may perform the data transmission using the first feedback mode. That is to say, the all or the part of relay terminal devices on the first link send an ACK to the previous hop device in the data transmission direction in the case where the all or the part of relay terminal devices receive an ACK from the next hop device in the data transmission direction. In this way, the reliability and continuity (service continuity) of the data transmission on the first link can be improved.

In order to facilitate understanding of the embodiments of the present disclosure, possible implementation solutions of the method shown in FIG. 6 are described below with reference to examples. The solutions may be applied to the U2N relay scenario or the U2U relay scenario.

In the current feedback mechanism, when the relay terminal device receives data from the previous hop (preceding hop) device in the data transmission direction, the relay terminal device directly feeds back whether the reception is successful. For example, in the scenario shown in FIG. 3, after the relay terminal device#1 receives data from the remote terminal device, the relay terminal device#1 may feed an ACK back to the remote terminal device. In this way, if the remote terminal receives the ACK, the remote terminal may acquire that the relay terminal device#1 has successfully received the data, but the remote terminal cannot acquire whether the target device has successfully received the data. In view of this, the embodiment of the present disclosure provides an enhanced feedback manner (i.e., the first feedback mode in the aforementioned embodiment). In this feedback manner, the relay terminal device may send ACK feedback information to the previous hop device after the relay terminal device receives ACK feedback from the next hop (later hop) device.

FIG. 7 illustrates a schematic flowchart of a feedback manner according to an embodiment of the present disclosure. In FIG. 7, the first device may be a remote terminal device (e.g., a first remote terminal device), and the second device may be a network device or another remote terminal device (e.g., a second remote terminal device). Alternatively, the second device may be a remote terminal device (e.g., a first remote terminal device), and the first device may be a network device or another remote terminal device (e.g., a second remote terminal device).

As shown in FIG. 7, it is assumed that the data transmission direction is from the first device to the second device, when the relay terminal device#1 receives data (e.g., the RLC PDU) from the first device, the relay terminal device#1 does not directly feed the ACK back to the first device, but firstly forwards the data to the next hop device (relay terminal device#2), and after the relay terminal device#2 feeds an ACK back to the relay terminal device#1, the relay terminal device#1 feeds an ACK back to the first device. If the relay terminal device#1 receives the NACK fed back by the relay terminal device#2, the relay terminal device#1 may perform the repetition of the data to the relay terminal device#2, and after the repetition is successful and the relay terminal device#1 receives the ACK feedback from the relay terminal device#2, the relay terminal device#1 may feed the ACK back to the first device. Similarly, when the relay terminal device#2 receives the data from the relay terminal device#1, the relay terminal device#2 does not directly feed an ACK back to the relay terminal device#1, but firstly forwards the data to the next hop device (the second device); and after the second device feeds the ACK back to the relay terminal device#2, the relay terminal device#2 feeds the ACK back to the relay terminal device#1. If the relay terminal device#2 receives the NACK fed back by the second device, the relay terminal device#2 may perform the repetition of the data to the second device, and after the repetition is successful and the relay terminal device#2 receives the ACK feedback from the second device, the relay terminal device#2 may feed the ACK back to the relay terminal device#1. In this way, if the first device receives the ACK feedback from the relay terminal device#1, it indicates that the second device has successfully received the data from the first device.

The aforementioned technical solution increases the reliability of the data transmission, but also increases the delay of the data transmission to a certain extent. In order to reduce the delay of the data transmission, it is possible to configure/dynamically indicate whether the transmission of each piece of data is required to be performed using this enhanced feedback manner. For the data for which transmission is not required to be performed using this enhanced feedback manner, the transmission may be performed in a general manner, to reduce the overall delay of the data transmission.

In some embodiments, the aforementioned data may be, for example, any of the following types of data: an SRB; a DRB; a RLC bearer, a RLC channel; or a logical channel.

In some implementations, the enhanced feedback manner may be configured for the data through the RRC configuration, and if the enhanced feedback manner is configured for certain data through the RRC configuration, it indicates that the transmission of the data is allowed to be performed using the enhanced feedback manner. The RRC configuration may be associated, for example, with specific data (e.g., the SRB/DRB/RLC bearer/RLC channel/logical channel).

Furthermore, the enhanced feedback manner may be activated through the control signaling. For example, after the enhanced feedback manner has been configured via the RRC, the control signaling may indicate data required to be activated. In the case where certain data is activated, or in the case where the enhanced feedback manner for the data is activated, the transmission of the data may be performed using the enhanced feedback manner.

In some embodiments, the control signaling may be, for example, any one of: an MAC CE; a PDCP control PDU; an RLC control PDU; or an SRAP control PDU. If the control signaling is the MAC CE, the RLC control PDU or the SRAP control PDU, the control signaling is required to be processed/forwarded by an intermediate node, i.e., the transmission of the control signaling is required to be performed in the hop-to-hop forwarding manner.

In some embodiments, in the U2N relay scenario, the RRC configuration may, for example, be from the network device in the scenario, and the control signaling may, for example, be from a network device or a remote terminal device in the scenario. In the U2U relay scenario, the RRC configuration may, for example, be from a network device, and the control signaling may, for example, be from one of the remote terminal devices (e.g., a remote terminal device that sends the data) in the scenario.

According to the aforementioned technical solution, the relay terminal device may perform the transmission of the specific data for which the enhanced feedback manner is configured and activated, and the transmission of other data may be performed using the general manner, thereby reducing the delay of the data transmission.

In some embodiments, the network device may adjust the configuration (e.g., maximum repetition number, etc.) of the RLC layer to control end-to-end delay.

According to the communication method provided by the embodiments of the present disclosure, in the relay scenario, the continuity (service continuity) of the data transmission is enhanced and the problem of the data loss due to the existence of intermediate nodes, especially when there is more than one intermediate node, can be avoided.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It is further to be understood that in various method embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure. In addition, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2 For example, a "downlink signal" represents that the transmission direction of the signal is the first direction. In addition, in the embodiments of the present disclosure, the term "and/or" is only an association relationship describing associated objects and represents that three relationships may exist. Specifically, A and/or B may represent three conditions: i.e., independent existence of A, existence of both A and B and independent existence of B. In addition, the character "/" in the present disclosure generally indicates that the relationship between the related objects is "or".

Based on the aforementioned embodiments, the embodiments of the present disclosure provide corresponding communication devices.

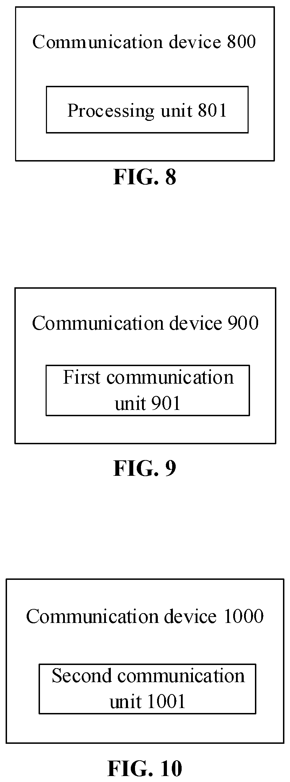

FIG. 8 is a first schematic diagram of a structural composition of a communication device according to an embodiment of the present disclosure. The communication device is applied to the first device. One or more relay terminal devices are present on a first link between the communication device 800 and a second device. As shown in FIG. 8, the communication device 800 (hereinafter simply referred to as the device 800) includes a processing unit 801.

The processing unit 801 is configured to disconnect the first link in a case where a timer expires. A start condition of the timer is associated with occurrence or imminent occurrence of a state change of the first link.

In some embodiments, the device 800 is a remote terminal device, the second device is a network device, and the start condition of the timer includes one or more of: receiving first indication information from the network device, the first indication information being used for instructing the remote terminal device to switch to another link from the first link; successfully accessing another link; or receiving second indication information from a first relay terminal device on the first link, the second indication information being used for indicating occurrence of a state change of a link between the first relay terminal device and an adjacent device on the first link.

In some embodiments, the occurrence of the state change of the link between the first relay terminal device and the adjacent device on the first link includes any one of: a radio link failure occurs on the link between the first relay terminal device and the adjacent device; quality of the link between the first relay terminal device and the adjacent device is lower than a first threshold; a link handover occurs for the first relay terminal device; or a cell handover occurs for the first relay terminal device.

In some embodiments, both the device 800 and the second device are the remote terminal devices, and the start condition of the timer includes: determining to perform a reselection of a relay terminal device between the device 800 and the second device.

In some embodiments, the device 800 is a first network device, the second device is a remote terminal device, and the start condition of the timer includes one or more of: sending third indication information to the remote terminal device, the third indication information being used for instructing the remote terminal device to switch to another link from the first link. receiving fourth indication information from the remote terminal device, the fourth indication information being used for indicating that the remote terminal device successfully accesses another link; receiving fifth indication information from a second network device, the fifth indication information being used for indicating that the remote terminal device successfully accesses the second network device; or sending sixth indication information to at least one relay terminal device on the first link, the sixth indication information sent to the relay terminal device being used for instructing the relay terminal device to perform a link handover.

In some embodiments, the device 800 further includes a restarting unit. The restarting unit is configured to restart the timer in a case where the device 800 receives data from the first link.

In some embodiments, the device 800 further includes a communication unit. The communication unit is configured to stop sending data to the second device during operation of the timer.

In some embodiments, the timing duration of the timer is associated with one or more of: a PDB of data transmitted on the first link; a priority of the data transmitted on the first link; a link quality of the first link; a number of relay terminal devices on the first link; a congestion level of a resource pool; or a resource allocation manner.

In some embodiments, the data transmitted on the first link includes multiple QoS flows. The PDB is a maximum value among PDBs of the multiple QoS flows; and the priority is a highest priority among priorities of the multiple QoS flows.

In some embodiments, the timing duration of the timer is configured by a network device, or determined by the device 800.

FIG. 9 is a second schematic diagram of a structural composition of a communication device according to an embodiment of the present disclosure. The communication device is applied to the third device. A first link on which the communication device 900 is located includes a remote terminal device, a target device and one or more relay terminal devices between the remote terminal device and the target device. As shown in FIG. 9, the communication device 900 (hereinafter simply referred to as the device 900) includes a first communication unit 901.

The first communication unit 901 is configured to send first information to a fourth device on the first link. The first information is used for determining whether data for which transmission has not been completed exists on the first link.

In some embodiments, the first communication unit 901 may be a first relay terminal device on the first link. The first information includes: seventh indication information used for indicating a data volume of data to be sent by the first relay terminal device; and/or eighth indication information used for indicating whether the first relay terminal device has buffered the data to be sent.

In some embodiments, the seventh indication information includes: the data volume of the data to be sent by the first relay terminal device and an identifier of the remote terminal device. The identifier of the remote terminal device is used for indicating that the data to be sent is associated with the remote terminal device.

In some embodiments, the seventh indication information may further include: an index of a logical channel or an index of a logical channel group. The index of the logical channel is used for indicating that the data to be sent is associated with the logical channel; and the index of the logical channel group is used for indicating that the data to be sent is associated with the logical channel group.

In some embodiments, the eighth indication information includes: a first parameter; and/or an identifier of the remote terminal device. The first parameter is used for indicating whether the first relay terminal device has buffered the data to be sent. In a case where the eighth indication information includes the first parameter and the first parameter indicates that the first relay terminal device has buffered the data to be sent, the identifier of the remote terminal device is used for indicating that the data to be sent is associated with the remote terminal device. In a case where the eighth indication information does not include the first parameter, the identifier of the remote terminal device is used for indicating that the first relay terminal device has buffered the data to be sent and the data to be sent is associated with the remote terminal device.

In some embodiments, the eighth indication information includes the identifier of the remote terminal device, and further includes: an index of a logical channel or an index of a logical channel group. In a case where the first relay terminal device has buffered the data to be sent, the index of the logical channel is used for indicating that the data to be sent is associated with the logical channel; and the index of the logical channel group is used for indicating that the data to be sent is associated with the logical channel group.

In some embodiments, the fourth device is: a remote terminal device; or a target device; or a relay terminal device adjacent to the first relay terminal device that is on the first link.

In some embodiments, the device 900 is a remote terminal device, the fourth device is a target device. The first information includes: ninth indication information. The ninth indication information is used for indicating data that has been sent by the remote terminal device to the target device, and/or, data that has been received by the remote terminal device from the target device.

In some embodiments, in the case where the ninth indication information is used for indicating the data that has been sent by the remote terminal device to the target device, the ninth indication information includes: an index of the data that has been sent by the remote terminal device to the target device. In the case where the ninth indication information is used for indicating the data that has been received by the remote terminal device from the target device, the ninth indication information includes an index of the data that has been received by the remote terminal device from the target device.

In some embodiments, the device 900 is a target device, the fourth device is a remote terminal device, and the first information includes: tenth indication information. The tenth indication information is used for indicating data that has been sent by the target device to the remote terminal device, and/or, data that has been received by the target device from the remote terminal device.

In some embodiments, in the case where the tenth indication information is used for indicating the data that has been sent by the target device to the remote terminal device, the tenth indication information includes: an index of the data that has been sent by the target device to the remote terminal device. In the case where the tenth indication information is used for indicating the data that has been received by the target device from the remote terminal device, the tenth indication information includes an index of the data that has been received by the target device from the remote terminal device.

In some embodiments, the first information is sent by the device 900 to the fourth device in a case where the device 900 receives request information.

In some embodiments, the first information is sent by the device 900 to the fourth device in a case where the device 900 receives request information. The request information includes the identifier of the remote terminal device; and the request information further includes the index of the logical channel or the index of the logical channel group.

In some embodiments, in a case where the device 900 is a remote terminal device, the request information is from a target device. In a case where the device 900 is a first relay terminal device on the first link, the request information is from a remote terminal device or a target device. In a case where the device 900 is the target device, the request information is from the remote terminal device.

In some embodiments, a period for the device 900 to send the first information to the fourth device is a first time interval.

In some embodiments, the first time interval is configured by the network device. Alternatively, the first time interval is preconfigured. Alternatively, the first time interval is configured by any one of relay terminal devices on the first link. Alternatively, the first time interval is configured by the remote terminal device.

In some embodiments, the first time interval is associated with one or more of: a number of relay terminal devices on the first link; a priority of the data transmitted on the first link; a congestion level of a resource pool; or a QoS parameter.

In some embodiments, the device 900 is the remote terminal device, and the first information is sent by the remote terminal device to the fourth device in the case where the remote terminal device meets the first condition. The first condition includes one or more of: receiving a first handover command from a network device, the first handover command being used for instructing the remote terminal device to switch to another link from the first link; quality of a link with a second relay terminal device is lower than a first threshold, the second relay terminal device being a relay terminal device on the first link that is directly connected to the remote terminal device; or receiving eleventh indication information from a first relay terminal device on the first link, the eleventh indication information being used for indicating occurrence of a state change of a link between the first relay terminal device and an adjacent device on the first link.

In some embodiments, the device 900 is the first relay terminal device on the first link, and the first information is sent by the first relay terminal device to the fourth device in a case where that the first relay terminal device meets a second condition. The second condition includes: occurrence of a state change of a link between the first relay terminal device and an adjacent device on the first link; and/or receiving twelfth indication information from the target device, the twelfth indication information being used for indicating release of a connection between the first relay terminal device and the target device.

In some embodiments, the occurrence of the state change of the link between the first relay terminal device and the adjacent device on the first link includes any one of: a radio link failure occurs on the link between the first relay terminal device and the adjacent device; quality of the link between the first relay terminal device and the adjacent device is lower than a first threshold; a link handover occurs for the first relay terminal device; or a cell handover occurs for the first relay terminal device.

In some embodiments, the device 900 is a target device and the target device is a network device, and the first information is sent by the network device to the fourth device in the case where the network device meets the third condition. The third condition includes: sending a first handover command to the remote terminal device; and/or, sending a second handover command to at least one relay terminal device on the first link; The first handover command is used for instructing the remote terminal device to switch to another link from the first link. The second handover command sent to the relay terminal device is used for instructing the relay terminal device to perform a link handover.

In some embodiments, the first information is carried by one of: RRC signaling; a PDCP status report; an MAC CE; a RLC control protocol data unit; or a SRAP control protocol data unit.

In some embodiments, the target device is a network device or a terminal device.

FIG. 10 is a third schematic diagram of a structural composition of a communication device according to an embodiment of the present disclosure. The communication device is applied to the fourth device. A first link on which the communication device 1000 is located includes a remote terminal device, a target device and one or more relay terminal devices between the remote terminal device and the target device. As shown in FIG. 10, the communication device 1000 (hereinafter simply referred to as the device 1000) includes a second communication unit 1001.

The second communication unit 1001 is configured to receive first information from a third device on the first link. The first information is used for determining whether data for which transmission has not been completed exists on the first link.

In some embodiments, the third device is a first relay terminal device on the first link, and the first information includes: seventh indication information used for indicating a data volume of data to be sent by the first relay terminal device; and/or eighth indication information used for indicating whether the first relay terminal device has buffered the data to be sent.

In some embodiments, the seventh indication information includes: the data volume of the data to be sent by the first relay terminal device and an identifier of the remote terminal device. The identifier of the remote terminal device is used for indicating that the data to be sent is associated with the remote terminal device.

In some embodiments, the seventh indication information may further include: an index of a logical channel or an index of a logical channel group. The index of the logical channel is used for indicating that the data to be sent is associated with the logical channel; and the index of the logical channel group is used for indicating that the data to be sent is associated with the logical channel group.

In some embodiments, the eighth indication information includes: a first parameter; and/or an identifier of the remote terminal device. The first parameter is used for indicating whether the first relay terminal device has buffered the data to be sent. In a case where the eighth indication information includes the first parameter and the first parameter indicates that the first relay terminal device has buffered the data to be sent, the identifier of the remote terminal device is used for indicating that the data to be sent is associated with the remote terminal device. In a case where the eighth indication information does not include the first parameter, the identifier of the remote terminal device is used for indicating that the first relay terminal device has buffered the data to be sent and the data to be sent is associated with the remote terminal device.

In some embodiments, the eighth indication information includes the identifier of the remote terminal device, and further includes: an index of a logical channel or an index of a logical channel group. In a case where the first relay terminal device has buffered the data to be sent, the index of the logical channel is used for indicating that the data to be sent is associated with the logical channel; and the index of the logical channel group is used for indicating that the data to be sent is associated with the logical channel group.

In some embodiments, the device 1000 is: a remote terminal device; or a target device; or a relay terminal device adjacent to the first relay terminal device that is on the first link.

In some embodiments, the third device is a remote terminal device, and the device 1000 is a target device. The first information includes ninth indication information. The ninth indication information is used for indicating data that has been sent by the remote terminal device to the target device, and/or, data that has been received by the remote terminal device from the target device.

In some embodiments, in the case where the ninth indication information is used for indicating the data that has been sent by the remote terminal device to the target device, the ninth indication information includes: an index of the data that has been sent by the remote terminal device to the target device. In the case where the ninth indication information is used for indicating the data that has been received by the remote terminal device from the target device, the ninth indication information includes an index of the data that has been received by the remote terminal device from the target device.

In some embodiments, the third device is a target device and the device 1000 is a remote terminal device. The first information includes tenth indication information. The tenth indication information is used for indicating data that has been sent by the target device to the remote terminal device, and/or, data that has been received by the target device from the remote terminal device.

In some embodiments, in the case where the tenth indication information is used for indicating the data that has been sent by the target device to the remote terminal device, the tenth indication information includes: an index of the data that has been sent by the target device to the remote terminal device. In the case where the tenth indication information is used for indicating the data that has been received by the target device from the remote terminal device, the tenth indication information includes an index of the data that has been received by the target device from the remote terminal device.

In some embodiments, the second communication unit 1001 is further configured to send request information to the third device before receiving the first information from the third device on the first link. The request information is used for requesting the first information.

In some embodiments, the second communication unit 1001 is further configured to send request information to the third device before receiving the first information from the third device on the first link. The request information is used for requesting the first information. The request information includes the identifier of the remote terminal device; and the request information further includes the index of the logical channel or the index of the logical channel group.

In some embodiments, in the case where the device 1000 is a remote terminal device, the third device is a target device or a first relay terminal device on the first link. In the case where the device 1000 is a target device, the third device is a remote terminal device or a first relay terminal device on the first link.

In some embodiments, in a case where the device 1000 is the remote terminal device, the request information is sent by the remote terminal device to the third device in the case where the remote terminal device meets the fourth condition. The fourth condition includes one or more of: receiving a first handover command from a network device, the first handover command being used for instructing the remote terminal device to switch to another link from the first link; quality of a link with a second relay terminal device is lower than a first threshold, the second relay terminal device being a relay terminal device on the first link that is directly connected to the remote terminal device; or receiving thirteenth indication information from a third relay terminal device on the first link, the thirteenth indication information being used for indicating occurrence of a state change of a link between the third relay terminal device and an adjacent device on the first link.

In some embodiments, the occurrence of the state change of the link between the third relay terminal device and the adjacent device on the first link includes any one of: a radio link failure occurs on the link between the third relay terminal device and the adjacent device; quality of the link between the third relay terminal device and the adjacent device is lower than a first threshold; a link handover occurs for the third relay terminal device; or a cell handover occurs for the third relay terminal device.

In some embodiments, in the case where the device 1000 is a target device and the target device is a network device, the request information is sent by the network device to the third device in the case where the network device meets the fifth condition. The fifth condition includes: sending a first handover command to the remote terminal device, the first handover command being used for instructing the remote terminal device to switch to another link from the first link; and/or sending a second handover command to at least one relay terminal device on the first link, the second handover command sent to the relay terminal device being used for instructing the relay terminal device to perform a link handover.

In some embodiments, the first information is carried by one of: a RRC signaling; a PDCP status report; an MAC CE; a RLC control protocol data unit; or an SRAP control protocol data unit.

In some embodiments, the target device is a network device or a terminal device.

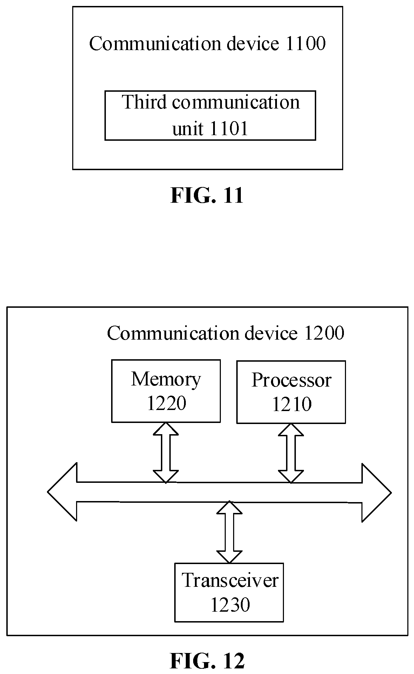

FIG. 11 is a fourth schematic diagram of a structural composition of a communication device according to an embodiment of the present disclosure. The communication device is applied to the fourth relay terminal device. The communication device 1100 is located on a first link between a first remote terminal device and a target device, and one or more relay terminal devices are present on the first link. As shown in FIG. 11, the communication device 1100 (hereinafter simply referred to as the device 1100) includes a third communication unit 1101.

The third communication unit 1101 is configured to: in a case where receiving a first ACK from a fifth device on the first link, send a second ACK to a sixth device on the first link. The fifth device is a next hop device of the device 1100 in a data transmission direction, and the sixth device is a previous hop device of the device 1100 in the data transmission direction. The first ACK is used for indicating that the fifth device has successfully received first data from the device 1100; and the second ACK is used for indicating that the device 1100 has successfully received the first data from the sixth device.

In some embodiments, the third communication unit 1101 is further configured to: before sending the second ACK to the sixth device on the first link, receive first data from the sixth device and send the first data to the fifth device.

In some embodiments, the third communication unit 1101 is further configured to in a case where receiving a NACK from the fifth device, perform repetition of the first data to the fifth device. The NACK is used for indicating that the fifth device has not successfully received the first data from the device 1100.

In some embodiments, a maximum repetition number of the repetitions of the first data to the fifth device is less than or equal to a first value, and the maximum repetition number of the repetitions is configured by a network device.

In some embodiments, the third communication unit 1101 is specifically configured to: in a case where a first condition is met, send the second ACK to the sixth device in the case where receiving the first ACK from the fifth device on the first link. The first condition includes allowing transmission of the first data using a first feedback mode, and the first feedback mode for the first data being activated.

In some embodiments, in a case where the target device is a network device, whether to allow the transmission of the first data using the first feedback mode is determined based on first information from the network device; and whether the first feedback mode for the first data is activated is determined based on second information from the network device or the first remote terminal device. In a case where the target device is a second remote terminal device, whether to allow the transmission of the first data using the first feedback mode is determined based on first information from a network device; and whether the first feedback mode for the first data is activated is determined based on second information from a first remote terminal device or the second remote terminal device.

In some embodiments, the first information is a (RRC configuration; and the second information is any one of: an MAC CE; a PDCP control protocol data unit; a RLC control protocol data unit; or an SRAP control protocol data unit.

In some embodiments, the first data may be any one of: an SRB; a DRB; an RLC bearer; a RLC channel; or a logical channel.

Those skilled in the art will appreciate that the related descriptions of the aforementioned communication device in the embodiments of the present disclosure may be understood with reference to the descriptions of the aforementioned communication method in the embodiments of the present disclosure.

FIG. 12 is a schematic structural diagram of a communication device 1200 according to an embodiment of the present disclosure. The communication device 1200 shown in FIG. 12 includes a processor 1210. The processor 1210 is configured to invoke and execute a computer program from a memory, to implement the methods in the embodiments of the present disclosure.

Optionally, as illustrated in FIG. 12, the communication device 1200 includes a memory 1220. The processor 1210 is configured to invoke and execute a computer program from the memory 1220, to perform the methods in the embodiments of the present disclosure.

The memory 1220 may be a separate device that is independent of the processor 1210 or may be integrated in the processor 1210.

Optionally, as illustrated in FIG. 12, the communication device 1200 may further include a transceiver 1230. The processor 1210 may control the transceiver 1230 to communicate with other devices. Specifically, the transceiver 1230 may send information or data to other devices, or receive information or data from other devices.

Herein, the transceiver 1230 may include a transmitter and a receiver. The transceiver 1230 may further include one or more antennas.

Optionally, the communication device 1200 may specifically be the first device in the embodiments of the present disclosure. The communication device 1200 may implement the corresponding flow implemented by the first device in various methods in the embodiments of the present disclosure. For brevity, details are not elaborated herein again.

Optionally, the communication device 1200 may be the third device in the embodiments of the present disclosure. The communication device 1200 may implement the corresponding flow implemented by the third device in various methods in the embodiments of the present disclosure. For brevity, details are not elaborated herein again.

Optionally, the communication device 1200 may be the fourth device in the embodiments of the present disclosure. The communication device 1200 may implement the corresponding flow implemented by the fourth device in various methods in the embodiments of the present disclosure. For brevity, details are not elaborated herein again.

Optionally, the communication device 100 may be the fourth relay terminal device in the embodiments of the present disclosure. The communication device 1200 may implement the corresponding flow implemented by the fourth relay terminal device in various methods in the embodiments of the present disclosure. For brevity, details are not elaborated herein again.

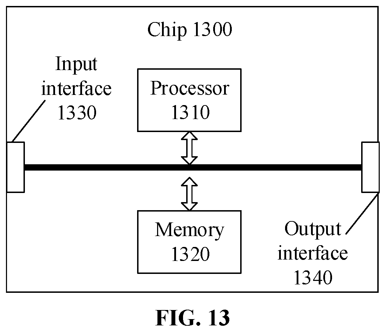

FIG. 13 is a schematic structural diagram of a chip in an embodiment of the present disclosure. The chip 1300 shown in FIG. 13 includes a processor 1310. The processor 1310 is configured to invoke and execute a computer program from a memory, to implement the methods in the embodiments of the present disclosure.

Optionally, as illustrated in FIG. 13, the chip 1300 includes a memory 1320. The processor 1310 is configured to invoke and execute a computer program from the memory 1320, to perform the methods in the embodiments of the present disclosure.

The memory 1320 may be a separate device that is independent of the processor 1310 or may be integrated in the processor 1310.

Optionally, the chip 1300 may further include an input interface 1330. The processor 1310 may control the input interface 1330 to communicate with other devices or chips. Specifically, the input interface 1130 may acquire information or data sent by other devices or chips.

Optionally, the chip 1300 may further include an output interface 1340. Herein, the processor 1310 may control the output interface 1340 to communicate with other devices or chips. Specifically, the output interface 1340 may output information or data to other devices or chips.

Optionally, the chip may be applied to the first device in the embodiments of the present disclosure. The chip may implement the corresponding flow implemented by the first device in various methods in the embodiments of the present disclosure. For brevity, details are not elaborated herein again.

Optionally, the chip may be applied to the third device in the embodiments of the present disclosure. The chip may implement the corresponding flow implemented by the third device in various methods in the embodiments of the present disclosure. For brevity, details are not elaborated herein again.

Optionally, the chip may be applied to the fourth device in the embodiments of the present disclosure. The chip may implement the corresponding flow implemented by the fourth device in various methods in the embodiments of the present disclosure. For brevity, details are not elaborated herein again.

Optionally, the chip may be applied to the fourth relay terminal device in the embodiments of the present disclosure. The chip may implement the corresponding flow implemented by the fourth relay terminal device in various methods in the embodiments of the present disclosure. For brevity, details are not elaborated herein again.

It should be understood that, the chip referred to in the embodiments of the present disclosure may also be referred to as a system-level chip, a system chip, a chip system, or a system-on-chip, etc.

It is to be understood that the processor in the embodiments of the present disclosure may be an integrated circuit chip with signal processing capacity. In the implementation process, various operations of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a mature storage medium in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It is to be understood that the memory in the embodiments of the present disclosure may be a volatile memory or a non-volatile memory, or may include both the volatile memory and the non-volatile memory. The non-volatile memory may be an ROM, a Programmable ROM (PROM), an Erasable PROM (EPROM), an Electrically EPROM (EEPROM) or a flash memory. The volatile memory may be a Random Access Memory (RAM) and is used as an external highspeed cache. It is exemplarily but unlimitedly described that RAMs in various forms may be adopted, such as a static RAM (SRAM), a dynamic RAM (DRAM), a Synchronous DDRAM (SDRAM), a double data rate SDRAM (DDR SDRAM), an Enhanced SDRAM (ESDRAM), a Synchlink DRAM (SLDRAM) and a Direct Rambus RAM (DR RAM). It is to be noted that the memory of the systems and methods includes described in the specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiments f the disclosure are intended to include, but not limited to, these and any other suitable types of memories.

An embodiment of the present disclosure further provides a computer-readable storage medium configured to store a computer program.

Optionally, the computer-readable storage medium may be applied to the first device in the embodiments of the present disclosure. The computer program causes the computer to implement the corresponding flow implemented by the first device in various methods in the embodiments of the present disclosure. For brevity, details are not elaborated herein again.

Optionally, the computer-readable storage medium may be applied to the third device in the embodiments of the present disclosure. The computer program causes the computer to implement the corresponding flow implemented by the third device in various methods in the embodiments of the present disclosure. For brevity, details are not elaborated herein again.

Optionally, the computer-readable storage medium may be applied to the fourth device in the embodiments of the present disclosure. The computer program causes the computer to implement the corresponding flow implemented by the fourth device in various methods in the embodiments of the present disclosure. For brevity, details are not elaborated herein again.

Optionally, the computer-readable storage medium may be applied to the fourth relay terminal device in the embodiments of the present disclosure. The computer program causes the computer to implement the corresponding flow implemented by the fourth relay terminal device in various methods in the embodiments of the present disclosure. For brevity, details are not elaborated herein again.

An embodiment of the present disclosure further provides a computer program product including computer program instructions.

Optionally, the computer program product may be applied to the first device in the embodiments of the present disclosure. The computer program instructions cause the computer to implement the corresponding flow implemented by the first device in various methods in the embodiments of the present disclosure. For brevity, details are not elaborated herein again.

Optionally, the computer program product may be applied to the third device in the embodiments of the present disclosure. The computer program instructions cause the computer to implement the corresponding flow implemented by the third device in various methods in the embodiments of the present disclosure. For brevity, details are not elaborated herein again.

Optionally, the computer program product may be applied to the fourth device in the embodiments of the present disclosure. The computer program instructions cause the computer to implement the corresponding flow implemented by the fourth device in various methods in the embodiments of the present disclosure. For brevity, details are not elaborated herein again.

Optionally, the computer program product may be applied to the fourth relay terminal device in the embodiments of the present disclosure. The computer program instructions cause the computer to implement the corresponding flow implemented by the fourth relay terminal device in various methods in the embodiments of the present disclosure. For brevity, details are not elaborated herein again.

An embodiment of the present disclosure further provides a computer program.

Optionally, the computer program may be applied to the first device in the embodiments of the present disclosure, and the computer program, when is run on a computer, causes the computer to perform the corresponding flows performed by the first device in various methods of the embodiments of the present disclosure. For brevity, details are not described herein again.

Optionally, the computer program may be applied to the third device in the embodiments of the present disclosure, and the computer program, when is run on a computer, causes the computer to perform the corresponding flows performed by the third device in various methods of the embodiments of the present disclosure. For brevity, details are not described herein again.

Optionally, the computer program may be applied to the fourth device in the embodiments of the present disclosure, and the computer program, when is run on a computer, causes the computer to perform the corresponding flows performed by the fourth device in various methods of the embodiments of the present disclosure. For brevity, details are not described herein again.

Optionally, the computer program may be applied to the fourth relay terminal device in the embodiments of the present disclosure, and the computer program, when is run on a computer, causes the computer to perform the corresponding flows performed by the fourth relay terminal device in various methods of the embodiments of the present disclosure. For brevity, details are not described herein again.

Those of ordinary skill in the art may realize that units and algorithm steps of various examples described in combination with the embodiments disclosed in the present disclosure herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned apparatuses and units, reference may be made to the corresponding processes in the aforementioned method embodiments, and such specific working processes of the systems, devices and units are not described herein again for the purpose of convenient and brief description

In the several embodiments provided in the present disclosure, it is to be understood that the disclosed system, devices, and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

If the function is implemented in the form of a software functional unit and sold or used as an independent product, it may also be stored in a computer-readable storage medium. Based on this understanding, the technical solutions of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the methods described in various embodiments of the disclosure. The aforementioned storage medium includes various media capable of storing a program code such as a USB disk, a mobile hard drive disk, a Read-Only Memory (ROM), a Random Access Memory (RAM), a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A communication method, applied to a first device and one or more relay terminal devices being present on a first link between the first device and a second device, the method comprising:
disconnecting the first link in a case where a timer expires, wherein a start condition of the timer is associated with occurrence or imminent occurrence of a state change of the first link.

2. The method of claim 1, wherein the first device is a remote terminal device, the second device is a network device, and the start condition of the timer comprises one or more of:
receiving first indication information from the network device, the first indication information being used for instructing the remote terminal device to switch to another link from the first link;
successfully accessing another link; or
receiving second indication information from a first relay terminal device on the first link, the second indication information being used for indicating occurrence of a state change of a link between the first relay terminal device and an adjacent device on the first link.

3. The method of claim 2, wherein the occurrence of the state change of the link between the first relay terminal device and the adjacent device on the first link comprises any one of:
a radio link failure occurs on the link between the first relay terminal device and the adjacent device;
quality of the link between the first relay terminal device and the adjacent device is lower than a first threshold;
a link handover occurs for the first relay terminal device; or
a cell handover occurs for the first relay terminal device.

4. The method of claim 1, wherein the first device and the second device are both remote terminal devices, and the start condition of the timer comprises:
determining to perform a reselection of a relay terminal device between the first device and the second device.

5. The method of claim 1, wherein the first device is a first network device, the second device is a remote terminal device, and the start condition of the timer comprises one or more of:
sending third indication information to the remote terminal device, the third indication information being used for instructing the remote terminal device to switch to another link from the first link;
receiving fourth indication information from the remote terminal device, the fourth indication information being used for indicating that the remote terminal device successfully accesses another link;
receiving fifth indication information from a second network device, the fifth indication information being used for indicating that the remote terminal device successfully accesses the second network device; or
sending sixth indication information to at least one relay terminal device on the first link, the sixth indication information sent to the relay terminal device being used for instructing the relay terminal device to perform a link handover.

6. The method of any one of claims 1 to 5, further comprising:
restarting the timer in a case where the first device receives data from the first link.

7. The method of any one of claims 1 to 6, further comprising:
stopping sending data to the second device during operation of the timer.

8. The method of any one of claims 1 to 7, wherein a timing duration of the timer is associated with one or more of:
a Packet Delay Budget (PDB) of data transmitted on the first link;
a priority of the data transmitted on the first link;
a link quality of the first link;
a number of relay terminal devices on the first link;
a congestion level of a resource pool; or
a resource allocation manner.

9. The method of claim 8, wherein
the data transmitted on the first link comprises a plurality of Quality of Service (QoS) flows, wherein
the PDB is a maximum value among PDBs of the plurality of QoS flows; and
the priority is a highest priority among priorities of the plurality of QoS flows.

10. The method of any one of claims 1 to 9, wherein
a timing duration of the timer is configured by a network device, or determined by the first device.

11. A communication method, applied to a third device and a first link on which the third device is located comprising a remote terminal device, a target device and one or more relay terminal devices between the remote terminal device and the target device, the method comprising:
sending first information to a fourth device on the first link, wherein the first information is used for determining whether data for which transmission has not been completed exists on the first link.

12. The method of claim 11, wherein the third device is a first relay terminal device on the first link, and the first information comprises:
seventh indication information, the seventh indication information being used for indicating data volume of data to be sent by the first relay terminal device; and/or
eighth indication information, the eighth indication information being used for indicating whether the first relay terminal device has buffered the data to be sent.

13. The method of claim 12, wherein
the seventh indication information comprises: the data volume of the data to be sent by the first relay terminal device and an identifier of the remote terminal device, the identifier of the remote terminal device being used for indicating that the data to be sent is associated with the remote terminal device.

14. The method of claim 13, wherein
the seventh indication information further comprises: an index of a logical channel or an index of a logical channel group, wherein
the index of the logical channel is used for indicating that the data to be sent is associated with the logical channel; and
the index of the logical channel group is used for indicating that the data to be sent is associated with the logical channel group.

15. The method of any one of claims 12 to 14, wherein
the eighth indication information comprises: a first parameter; and/or an identifier of the remote terminal device, wherein
the first parameter is used for indicating whether the first relay terminal device has buffered the data to be sent;
in a case where the eighth indication information comprises the first parameter and the first parameter indicates that the first relay terminal device has buffered the data to be sent, the identifier of the remote terminal device is used for indicating that the data to be sent is associated with the remote terminal device; and
in a case where the eighth indication information excludes the first parameter, the identifier of the remote terminal device is used for indicating that the first relay terminal device has buffered the data to be sent and the data to be sent is associated with the remote terminal device.

16. The method of claim 15, wherein
the eighth indication information comprises the identifier of the remote terminal device, and further comprises: an index of a logical channel or an index of a logical channel group,
in a case where the first relay terminal device has buffered the data to be sent, the index of the logical channel is used for indicating that the data to be sent is associated with the logical channel; the index of the logical channel group is used for indicating that the data to be sent is associated with the logical channel group.

17. The method of any one of claims 12 to 16, wherein the fourth device is:
the remote terminal device; or
the target device; or
a relay terminal device on the first link that is adjacent to the first relay terminal device.

18. The method of claim 11, wherein the third device is the remote terminal device, the fourth device is the target device, and the first information comprises:
ninth indication information, the ninth indication information being used for indicating data that has been sent by the remote terminal device to the target device, and/or, data that has been received by the remote terminal device from the target device.

19. The method of claim 18, wherein
in a case where the ninth indication information is used for indicating the data that has been sent by the remote terminal device to the target device, the ninth indication information comprises: an index of the data that has been sent by the remote terminal device to the target device; and
in a case where the ninth indication information is used for indicating data that has been received by the remote terminal device from the target device, the ninth indication information comprises an index of the data that has been received by the remote terminal device from the target device.

20. The method of claim 11, wherein the third device is the target device, the fourth device is the remote terminal device, and the first information comprises:
tenth indication information, the tenth indication information being used for indicating data that has been sent by the target device to the remote terminal device, and/or, data that has been received by the target device from the remote terminal device.

21. The method of claim 20, wherein
in a case where the tenth indication information is used for indicating the data that has been sent by the target device to the remote terminal device, the tenth indication information comprises: an index of the data that has been sent by the target device to the remote terminal device; and
in a case where the tenth indication information is used for indicating the data that has been received by the target device from the remote terminal device, the tenth indication information comprises an index of the data that has been received by the target device from the remote terminal device.

22. The method of any one of claims 11 to 21, wherein
the first information is sent by the third device to the fourth device in a case where the third device receives request information.

23. The method of claim 14 or 16, wherein
the first information is sent by the third device to the fourth device in a case where the third device receives request information, wherein
the request information comprises the identifier of the remote terminal device; and
the request information further comprises the index of the logical channel or the index of the logical channel group.

24. The method of claim 22 or 23, wherein
in a case where the third device is the remote terminal device, the request information is from the target device;
in a case where the third device is a first relay terminal device on the first link, the request information is from the remote terminal device or the target device; and
in a case where the third device is the target device, the request information is from the remote terminal device.

25. The method of any one of claims 11 to 21, wherein
a period for the third device to send the first information to the fourth device is a first time interval.

26. The method of claim 25, wherein
the first time interval is configured by a network device; or
the first time interval is preconfigured; or
the first time interval is configured by any relay terminal device on the first link; or
the first time interval is configured by the remote terminal device.

27. The method of claim 25 or 26, wherein
wherein the first time interval is associated with one or more of:
a number of relay terminal devices on the first link;
a priority of the data transmitted on the first link;
a congestion level of a resource pool; or
a Quality of Service (QoS) parameter.

28. The method of claim 11, 18 or 19, wherein
the third device is the remote terminal device, and the first information is sent by the remote terminal device to the fourth device in a case where the remote terminal device meets a first condition, wherein
the first condition comprises one or more of:
receiving a first handover command from a network device, the first handover command being used for instructing the remote terminal device to switch to another link from the first link;
quality of a link with a second relay terminal device is lower than a first threshold, the second relay terminal device being a relay terminal device on the first link that is directly connected to the remote terminal device; or
receiving eleventh indication information from a first relay terminal device on the first link, the eleventh indication information being used for indicating occurrence of a state change of a link between the first relay terminal device and an adjacent device on the first link.

29. The method of any one of claims 11 to 17, wherein
the third device is a first relay terminal device on the first link, and the first information is sent by the first relay terminal device to the fourth device in a case where that the first relay terminal device meets a second condition, wherein
the second condition comprises:
occurrence of a state change of a link between the first relay terminal device and an adjacent device on the first link; and/or
receiving twelfth indication information from the target device, the twelfth indication information being used for indicating release of a connection between the first relay terminal device and the target device.

30. The method of claim 28 or 29, wherein the occurrence of the state change of the link between the first relay terminal device and the adjacent device on the first link comprises any one of:
a radio link failure occurs on the link between the first relay terminal device and the adjacent device;
quality of the link between the first relay terminal device and the adjacent device is lower than a first threshold;
a link handover occurs for the first relay terminal device; or
a cell handover occurs for the first relay terminal device.

31. The method of claim 11, 20 or 21, wherein
the third device is the target device, and the target device is a network device, and the first information is sent by the network device to the fourth device in a case where the network device meets a third condition; wherein
the third condition comprises:
sending a first handover command to the remote terminal device; and/or,
sending a second handover command to at least one relay terminal device on the first link;
wherein the first handover command is used for instructing the remote terminal device to switch to another link from the first link; the second handover command sent to the relay terminal device is used for instructing the relay terminal device to perform a link handover.

32. The method of any one of claims 11 to 31, wherein the first information is carried by one of:
a Radio Resource Control (RRC) signaling;
a Packet Data Convergence Protocol (PDCP) status report;
a Media Access Control Control Element (MAC CE);
a Radio Link Control (RLC) control protocol data unit; or
a Sidelink Relay Adaptation Protocol (SRAP) control protocol data unit.

33. The method of any one of claims 11 to 32, wherein
the target device is a network device or a terminal device.

34. A communication method, applied to a fourth device and a first link on which the fourth device is located comprising a remote terminal device, a target device and one or more relay terminal devices between the remote terminal device and the target device, the method comprising:
receiving first information from a third device on the first link, wherein the first information is used for determining whether data for which transmission has not been completed exists on the first link.

35. The method of claim 34, wherein the third device is a first relay terminal device on the first link, and the first information comprises:
seventh indication information, the seventh indication information being used for indicating data volume of data to be sent by the first relay terminal device; and/or
eighth indication information, the eighth indication information being used for indicating whether the first relay terminal device has buffered the data to be sent.

36. The method of claim 35, wherein
the seventh indication information comprises: the data volume of the data to be sent by the first relay terminal device and an identifier of the remote terminal device, the identifier of the remote terminal device being used for indicating that the data to be sent is associated with the remote terminal device.

37. The method of claim 36, wherein
the seventh indication information further comprises: an index of a logical channel or an index of a logical channel group, wherein
the index of the logical channel is used for indicating that the data to be sent is associated with the logical channel; and
the index of the logical channel group is used for indicating that the data to be sent is associated with the logical channel group.

38. The method of any one of claims 35 to 37, wherein
the eighth indication information comprises: a first parameter; and/or an identifier of the remote terminal device, wherein
the first parameter is used for indicating whether the first relay terminal device has buffered the data to be sent;
in a case where the eighth indication information comprises the first parameter and the first parameter indicates that the first relay terminal device has buffered the data to be sent, the identifier of the remote terminal device is used for indicating that the data to be sent is associated with the remote terminal device; and
in a case where the eighth indication information excludes the first parameter, the identifier of the remote terminal device is used for indicating that the first relay terminal device has buffered the data to be sent and the data to be sent is associated with the remote terminal device.

39. The method of claim 38, wherein
the eighth indication information comprises the identifier of the remote terminal device, and further comprises: an index of a logical channel or an index of a logical channel group,
in a case where the first relay terminal device has buffered the data to be sent, the index of the logical channel is used for indicating that the data to be sent is associated with the logical channel; the index of the logical channel group is used for indicating that the data to be sent is associated with the logical channel group.

40. The method of any one of claims 35 to 39, wherein the fourth device is:
the remote terminal device; or
the target device; or
a relay terminal device on the first link that is adjacent to the first relay terminal device.

41. The method of claim 34, wherein the third device is the remote terminal device, the fourth device is the target device, and the first information comprises:
ninth indication information, the ninth indication information being used for indicating data that has been sent by the remote terminal device to the target device, and/or, data that has been received by the remote terminal device from the target device.

42. The method of claim 41, wherein
in a case where the ninth indication information is used for indicating the data that has been sent by the remote terminal device to the target device, the ninth indication information comprises: an index of the data that has been sent by the remote terminal device to the target device; and
in a case where the ninth indication information is used for indicating data that has been received by the remote terminal device from the target device, the ninth indication information comprises an index of the data that has been received by the remote terminal device from the target device.

43. The method of claim 34, wherein the third device is the target device, the fourth device is the remote terminal device, and the first information comprises:
tenth indication information, the tenth indication information being used for indicating data that has been sent by the target device to the remote terminal device, and/or, data that has been received by the target device from the remote terminal device.

44. The method of claim 43, wherein
in a case where the tenth indication information is used for indicating the data that has been sent by the target device to the remote terminal device, the tenth indication information comprises: an index of the data that has been sent by the target device to the remote terminal device; and
in a case where the tenth indication information is used for indicating the data that has been received by the target device from the remote terminal device, the tenth indication information comprises an index of the data that has been received by the target device from the remote terminal device.

45. The method of any one of claims 34 to 44, further comprising: before receiving the first information from the third device on the first link,
sending request information to the third device, the request information being used for requesting the first information.

46. The method of claim 37 or 39, further comprising: before receiving the first information from the third device on the first link,
sending request information to the third device, the request information being used for requesting the first information, wherein
the request information comprises the identifier of the remote terminal device; and
the request information further comprises the index of the logical channel or the index of the logical channel group.

47. The method of claim 45 or 46, wherein
in a case where the fourth device is the remote terminal device, the third device is the target device or a first relay terminal device on the first link; and
in a case where the fourth device is the target device, the third device is the remote terminal device or the first relay terminal device on the first link.

48. The method of any one of claims 45 to 47, wherein
in a case where the fourth device is the remote terminal device, the request information is sent by the remote terminal device to the third device in a case where the remote terminal device meets a fourth condition, wherein
the fourth condition comprises one or more of:
receiving a first handover command from a network device, the first handover command being used for instructing the remote terminal device to switch to another link from the first link;
quality of a link with a second relay terminal device is lower than a first threshold, the second relay terminal device being a relay terminal device on the first link that is directly connected to the remote terminal device; or
receiving thirteenth indication information from a third relay terminal device on the first link, the thirteenth indication information being used for indicating occurrence of a state change of a link between the third relay terminal device and an adjacent device on the first link.

49. The method of claim 48, wherein the occurrence of the state change of the link between the third relay terminal device and the adjacent device on the first link comprises any one of:
a radio link failure occurs on the link between the third relay terminal device and the adjacent device;
quality of the link between the third relay terminal device and the adjacent device is lower than a first threshold;
a link handover occurs for the third relay terminal device; or
a cell handover occurs for the third relay terminal device.

50. The method of any one of claims 45 to 47, wherein
in a case where the fourth device is the target device, and the target device is a network device, the request information is sent by the network device to the third device in a case where the network device meets a fifth condition; wherein
the fifth condition comprises:
sending a first handover command to the remote terminal device, the first handover command being used for instructing the remote terminal device to switch to another link from the first link; and/or
sending a second handover command to at least one relay terminal device on the first link, the second handover command sent to the relay terminal device being used for instructing the relay terminal device to perform a link handover.

51. The method of any one of claims 34 to 50, wherein the first information is carried by one of:
a Radio Resource Control (RRC) signaling;
a Packet Data Convergence Protocol (PDCP) status report;
a Media Access Control Control Element (MAC CE);
a Radio Link Control (RLC) control protocol data unit; or
a Sidelink Relay Adaptation Protocol (SRAP) control protocol data unit.

52. The method of any one of claims 34 to 51, wherein
the target device is a network device or a terminal device.

53. A communication method, applied to a fourth relay terminal device located on a first link between a first remote terminal device and a target device, one or more relay terminal devices being present on the first link, the method comprising:
in a case where receiving a first Acknowledgement (ACK) from a fifth device on the first link, sending a second ACK to a sixth device on the first link,
wherein the fifth device is a next hop device of the fourth relay terminal device in a data transmission direction; the sixth device is a previous hop device of the fourth relay terminal device in the data transmission direction; the first ACK is used for indicating that the fifth device has successfully received first data from the fourth relay terminal device; and the second ACK is used for indicating that the fourth relay terminal device has successfully received the first data from the sixth device.

54. The method of claim 53, further comprising: before sending the second ACK to the sixth device on the first link,
receiving the first data from the sixth device and sending the first data to the fifth device.

55. The method of claim 53 or 54, further comprising:
in a case where receiving a Negative Acknowledgement (NACK) from the fifth device, performing repetition of the first data to the fifth device, wherein the NACK being used for indicating that the fifth device has not successfully received the first data from the fourth relay terminal device.

56. The method of claim 55, wherein
a maximum repetition number of the repetitions of the first data to the fifth device is less than or equal to a first value, the maximum repetition number of the repetitions being configured by a network device.

57. The method of any one of claims 53 to 56, wherein sending the second ACK to the sixth device on the first link in the case where receiving the first ACK from the fifth device on the first link comprises:
in a case where a first condition is met, sending the second ACK to the sixth device in the case where receiving the first ACK from the fifth device on the first link,
the first condition comprises:
allowing transmission of the first data using a first feedback mode, and the first feedback mode for the first data being activated.

58. The method of claim 57, wherein
in a case where the target device is a network device, whether to allow the transmission of the first data using the first feedback mode is determined based on first information from the network device; and whether the first feedback mode for the first data is activated is determined based on second information from the network device or the first remote terminal device; and
in a case where the target device is a second remote terminal device, whether to allow the transmission of the first data using the first feedback mode is determined based on first information from a network device; and whether the first feedback mode for the first data is activated is determined based on second information from a first remote terminal device or the second remote terminal device.

59. The method of claim 58, wherein
the first information is a Radio Resource Control (RRC) configuration; and the second information is any one of:
a Media Access Control Control Element (MAC CE);
a Packet Data Convergence Protocol (PDCP) control protocol data unit;
a Radio Link Control (RLC) control protocol data unit; or
a Sidelink Relay Adaptation Protocol (SRAP) control protocol data unit.

60. The method of any one of claims 53 to 59, wherein the first data is any one of:
a signaling radio bearer;
a data radio bearer;
a RLC bearer;
a RLC channel; or
a logical channel.

61. A communication device, one or more relay terminal devices being present on a first link between the device and a second device, the device comprising:
a processing unit, configured to disconnect the first link in a case where a timer expires, wherein a start condition of the timer is associated with occurrence or imminent occurrence of a state change of the first link.

62. A communication device, a first link on which the device is located comprising a remote terminal device, a target device and one or more relay terminal devices between the remote terminal device and the target device, the device comprising:
a first communication unit, configured to send first information to a fourth device on the first link, wherein the first information is used for determining whether data for which transmission has not been completed exists on the first link.

63. A communication device, a first link on which the device is located comprising a remote terminal device, a target device and one or more relay terminal devices between the remote terminal device and the target device, the device comprising:
a second communication unit, configured to receive first information from a third device on the first link, wherein the first information is used for determining whether data for which transmission has not been completed exists on the first link.

64. A communication device, the device being located on a first link between a first remote terminal device and a target device, one or more relay terminal devices being present on the first link, the device comprising:
a third communication unit configured to: in a case where receiving a first Acknowledgement (ACK) from a fifth device on the first link, send a second ACK to a sixth device on the first link,
wherein the fifth device is a next hop device of the device in a data transmission direction, and the sixth device is a previous hop device of the device in the data transmission direction; the first ACK is used for indicating that the fifth device has successfully received first data from the device; and the second ACK is used for indicating that the device has successfully received the first data from the sixth device.

65. A communication device, comprising a processor and a memory, wherein the memory is configured to store a computer program, and the processor is configured to invoke and execute the computer program stored in the memory, to perform the method of any one of claims 1 to 10, or the method of any one of claims 11 to 33, or the method of any one of claims 34 to 52, or the method of any one of claims 53 to 60.

66. A chip, comprising a processor configured to invoke and execute a computer program from a memory, to enable a device on which the chip is mounted to perform the method of any one of claims 1 to 10, or the method of any one of claims 11 to 33, or the method of any one of claims 34 to 52, or the method of any one of claims 53 to 60.

67. A computer-readable storage medium configured to store a computer program, wherein the computer program causes a computer to perform the method of any one of claims 1 to 10, or the method of any one of claims 11 to 33, or the method of any one of claims 34 to 52, or the method of any one of claims 53 to 60.

68. A computer program product comprising computer program instructions, wherein the computer program instructions cause a computer to perform the method of any one of claims 1 to 10, or the method of any one of claims 11 to 33, or the method of any one of claims 34 to 52, or the method of any one of claims 53 to 60.

69. A computer program that causes a computer to perform the method of any one of claims 1 to 10, or the method of any one of claims 11 to 33, or the method of any one of claims 34 to 52, or the method of any one of claims 53 to 60.
